**Europäisches Patentamt**

**European Patent Office**

**Office européen des brevets**

(19)

(11) Veröffentlichungsnummer: **0 256 455 B1**

## (12) EUROPÄISCHE PATENTSCHRIFT

(45) Veröffentlichungstag der Patentschrift: **02.05.91**

(51) Int. Cl.⁵: **G06F 7/52**

(21) Anmeldenummer: **87111482.3**

(22) Anmeldetag: **07.08.87**

(54) Verfahren zur schnellen Division langer Operanden in Datenverarbeitungsanlagen und Schaltungsanordnung zur Durchführung des Verfahrens.

(30) Priorität: **11.08.86 DE 3627191**

(43) Veröffentlichungstag der Anmeldung:
**24.02.88 Patentblatt 88/08**

(45) Bekanntmachung des Hinweises auf die
Patenterteilung:
**02.05.91 Patentblatt 91/18**

(84) Benannte Vertragsstaaten:
**AT BE CH DE FR GB IT LI NL SE**

(56) Entgegenhaltungen:
**US-A- 3 852 581**

**IBM TECHNICAL DISCLOSURE BULLETIN,
Band 18, Nr. 3, August 1975, Seiten 837-840,
New York, US; K.G. TAN: "High-radix division
quotient selection by 2-level control memories"**

(73) Patentinhaber: **Siemens Aktiengesellschaft
Wittelsbacherplatz 2
W-8000 München 2(DE)**

(72) Erfinder: **Ziemann, Wolfgang, Dipl.-Inf.
Tulpenweg 3
W-8011 Siegertsbrunn(DE)**

## Beschreibung

Die Erfindung betrifft ein Verfahren zur schnellen Division langer Operanden in Datenverarbeitungseinrichtungen und eine Schaltungsanordnung zur Durchführung des Verfahrens entsprechend den im Oberbegriff des Hauptanspruches angegebenen Merkmalen.

Derartige Verfahren und Schaltungsanordnungen zur Ausführung dieser Verfahren sind bekannt. Aus IBM technical disclosure bulletin, vol. 18, no. 3, August 1975, ist z.B. eine Divisionseinrichtung bekannt, die zur Ermittlung der Quotienten eine Tabelle mit entsprechenden Quotienten verwendet und den jeweils zwischenzeitlich gültigen Dividenden parallel in ungekürzter und auf höherwertige Bitstellen beschränkt verkürzter Form ermittelt. Mit den verkürzten Dividenden und dem verkürzten Divisor wird die Tabelle mit den Quotienten angesteuert. Die Ermittlung des unverkürzten Dividenden erfolgt mittels einer vollständig ausgebildeten Addiereinrichtung, so daß dieser am Ende jeweils in Form einer Gesamtdarstellung ermittelt wird. Daneben sind aufgrund des der Divisionseinrichtung zugrundeliegenden Divisionsalgorythmus negative Dividendenergebnisse möglich. In diesen Fällen ist eine Korrektur des Dividenden und des Quotienten erforderlich. Hierzu weist die Tabelle einen mit negativen Vorzeichen beaufschlagten gespiegelten zweiten Tabellenteil auf. Durch die vollständig ausgebildete Addiereinrichtung zur Ermittlung des unverkürzten Dividenden und der gegebenenfalls durchzuführenden Korrekturmaßnahmen wird die Verarbeitungsgeschwindigkeit der Divisionseinrichtung herabgesetzt. Zur Erweiterung der Divisionseinrichtung zur Verarbeitung längerer Operanden muß die Addiereinrichtung insgesamt durch eine neue ersetzt werden. Die Verarbeitungsgeschwindigkeit dieser Addiereinrichtung ist langsamer, so daß die Gesamtzykluszeit für einen Divisionsschritt verlängert wird.

Der DE-OS 23 60 022 kann ein Verfahren und eine Schaltungsanordnung zur Durchführung des Verfahrens entnommen werden, durch das über eine Vorausschauschaltung während des Ablaufs eines Divisionsschrittes ohne Kenntnis des erst am Ende dieses Divisionsschrittes zur Verfügung stehenden Dividendenrests mit dem im ablaufenden Divisionsschritt verwendeten Multiplikationsfaktor und des im vorherigen Divisionsschritt ermittelten Divisionsschritt ermittelt und der beim vorherigen Divisionsschritt verwendete Multiplikationsfaktor aufgrund des Vorzeichens des Dividendenrestergebnisses des vorherigen und vorvorherigen Divisionsschritts korrigiert an den Gesamtquotienten angehängt wird. Der Multiplikationsfaktor weist dabei jeweils zwei Bitstellen auf. Zur Ermittlung des Multiplikationsfaktors für den nächsten Divisionsschritt wird der verwendete Multiplikationsfaktor mit einem aus einer Tabelle entnommenen Multiplikationsfaktor verglichen, durch den ausgesagt wird, welcher Multiplikationsfaktor aufgrund des Dividendenrestergebnisses des vorherigen Dividendenschritts hätte verwendet werden müssen. Das Ergebnis des Vergleichs ist ein Multiplikationsfaktor, mit dem das im vorherigen Divisionsschritt ermittelte Dividendenrestergebnis durch eine Addition des Divisorvielfachen zum Dividendenrest anstelle einer Subtraktion des Divisorvielfachen vom Dividendenrest gegebenenfalls berichtigt wird und der die Grundlage zur Berechnung des richtigen Quotienten bildet. Für die Vorhersage des ersten Multiplikationsfaktors zur Durchführung des ersten Divisionsschritts sind die Tabelle und die Multiplikationsfaktor-Vorausschauschaltung nicht zu verwenden, da diese für die Ermittlung des im nächsten Divisionsschritt zu verwendenden Multiplikationsfaktor nur eine Aussage im Zusammenhang mit dem dem vorherigen Divisionsschritt entnommenen Multiplikationsfaktor und Dividendenrest ermöglichen. Der erste Divisionsschritt wird deshalb mit einem Multiplikationsfaktor durchgeführt, der anhand eines Vergleichs der relativen Größe des normierten Dividenden und Divisors und anhand eines Vergleichs der Operandenlängen des Dividenden und Divisors bestimmt wird.

Die zur Durchführung des Verfahrens angegebene Schaltungsanordnung weist deshalb neben einer Vielzahl von, den Multiplikationsfaktor, Vielfache des Divisors und den Dividendenrest zwischenspeichernden Registern eine Multiplikationsfaktor-Vorausschauschaltung, eine Multiplikationsfaktor-Tabelle, eine aus dem zwischengespeicherten Multiplikationsfaktor abgeleitete Quotientenbit-Korrekturschaltung sowie neben der die Division ausführenden Addierschaltung und dem Register für den Gesamtquotienten ein aus elementaren logischen Verknüpfungsbausteinen gebildetes, für die Vielfachen des Divisors und für die zusätzlich einzeln bereitgestellten Multiplikationsfaktorwerte als Torschaltung wirkendes, durch die Multiplikationsfaktor-Vorausschauschaltung gesteuertes Schaltnetz auf.

Ein Nachteil des Verfahrens ist, daß zur Gewinnung eines ersten Multiplikationsfaktors aufwendige Vergleiche der Operanden und durch die fehlerbehaftete Vorausschau zur Ermittlung eines Multiplikationsfaktors während des Divisionsvorganges Korrekturberechnungen zur Korrektur der Quotientenbits und des Multiplikationsfaktors ausgeführt werden müssen. Außerdem sind für den Aufbau der für die Multiplikationsfaktor-Vorausschau verwendeten Multiplikationsfaktor-Tabelle umfangreiche mathematische Betrachtungen notwendig. Die dem Verfahren zugrundegelegte Schaltungsanordnung benötigt eine komplizierte Operandenvergleichs-, Quotientenbitkorrektur- und Multiplikationsfaktor-Vorausschauschaltung mit vie-

EP 0 256 455 B1

len Zwischenregistern und langen Datenpfaden sowie eine schwierig aufzustellende und zu realisierende Multiplikationsfaktor- bzw. Quotientenbit-Tabelle. Die durch die Addierschaltung ausgeführte vollständige Addition des alten Dividendenrests und dem komplementierten Produkt aus Multiplikationsfaktor und Divisor zum Erhalt eines neuen Dividendenrests ist zeit-und materialaufwendig. Der nachträgliche Ausbau der komplexen Schaltungsanordnung zum Verarbeiten längerer Operanden beansprucht eine Anpassung sämtlicher Schaltungsteile und Datenwege und damit eine gänzliche Neugestaltung der Schaltungsanordnung. Insgesamt wird durch den Ausbau und den dadurch bedingten erhöhten Hardware-Aufwand die Verarbeitungsgeschwindigkeit verlangsamt.

Aus der US-PS 3 591 787 ist ein Verfahren und zur Durchführung des Verfahrens eine Schaltungsanordnung bekannt, die in einem, dem Divisionsablauf vorgeschalteten, einmaligen Ausführungsschritt in Abhängigkeit von der Größe des Divisors aus einer Tabelle einen Faktor entnimmt, mit dem der Dividend und der Divisor zur Gewinnung eines neuen Dividenden und Divisor multipliziert werden. Der Wert des aus der Tabelle entnommenen Multiplikationsfaktors ist so gewählt, daß der neue Divisor einen Wert nahe dem Wert 1 annimmt. Im nachfolgenden Divisionsablauf stehen dann bei jedem Divisionsschritt jeweils mit den höchstwertigen Bitstellen der Dividendenreste auch die Quotientenbits zur Bildung eines Gesamtquotienten und weiter ein Multiplikationsfaktor zur Bestimmung des nächsten Dividendenrests zur Verfügung. Die den höchstwertigsten Bitstellen der jeweiligen Dividendenreste entnommenen Quotientenbits werden zur Bildung des Gesamtquotienten überlappt aufaddiert. Zur Beschleunigung des Divisionsablaufs wird der Dividendenrest in Form einer Übertrags- und Summenkomponente berechnet. Dementsprechend weist die zur Durchführung des Verfahrens verwendete Schaltungsanordnung Übertrags- und Summenregister auf, in die der Dividendenrest als Ausgabe der sich davor befindenden Addierschaltung eingeschrieben wird. Die Addierschaltung ist ein mit Carry-Save-Adder aufgebauter Wallace-Tree-Adder. Der Aufbau derartiger Einheiten ist bekannt und beispielsweise dem Buch O. Spaniol, "Arithmetik in Rechenanlagen", Teubner-Verlag Stuttgart, zu entnehmen.

Nachteilig bei der hier verwendeten Schaltungsanordnung zur Durchführung des Verfahrens ist, daß bei einer nachträglichen Erweiterung der Schaltungsanordnung zur Verarbeitung längerer Operanden ebenfalls sämtliche Schaltungsteile betroffen sind und dadurch eine gänzliche Neugestaltung der Schaltungsanordnung notwendig ist. Auch wird die Verarbeitungsgeschwindigkeit durch die erweiterte Hardware und der dadurch bedingten längeren Datenwege langsamer.

Aufgabe der Erfindung ist es, ein Verfahren und zur Durchführung des Verfahrens eine Schaltungsanordnung für eine schnelle Division langer Operanden zu schaffen, das bei einfachem Aufbau eine nachträgliche modulartige Erweiterung der Schaltungsanordnung bei Verlängerung der Operanden ermöglicht, ohne daß der vorhandene Teil der Schaltungsanordnung neu gestaltet werden muß und ohne daß die Erweiterung die Ausführungszeit eines Divisionsschrittes verlängert.

Diese Aufgabe wird für das Verfahren durch die kennzeichnenden Merkmale des Patentanspruches 1 gelöst. Danach wird nicht nur parallel jeweils ein unverkürzter und ein auf höhere Bitstellen beschränkter verkürzter Dividend ermittelt, sondern dabei der unverkürzte Dividend jeweils in Form einer Summen- und Übertragskomponente gehalten, ohne diese zu einem Gesamtdividenden zu verknüpfen. Der verkürzte Dividend dient zur Ansteuerung einer Tabelle mit Teilquotienten, die die notwendigen Quotienten enthält. Durch die Verwendung eines verkürzten Dividenden wird die Division zweier Operanden unabhängig von den Operandenlängen. Die zweite Maßnahme, nämlich den unverkürzten Dividenden in Form einer Summen- und Übertragskomponente zu führen, ermöglicht es, einmal die Verarbeitungszeit pro Divisionsschritt um die Additionszeit zur Verknüpfung der beiden Kcmponenten zu verkürzen und damit die Gesamtdivision zu beschleunigen, und zum anderen den zur Bestimmung des unverkürzten Dividenden maßgebenden Teil der Divisionseinrichtung modulartig aufzubauen. Damit ist auf einfache Weise eine nachträgliche Erweiterung der Divisionseinrichtung, nämlich durch Hinzufügen weiterer Module, ohne die bestehende Schaltungsanordnung verändern zu müssen, zur Division längerer Operanden möglich. Zur Ermittlung der Quotienten aus der Tabelle bilden der verkürzte Dividend und der gleichsinnig verkürzte Divisor die Adressen zur Ansteuerung. Der Dividend und der Divisor sind maximal verkürzt, wodurch die Tabelle sehr klein wird. Die Verkürzung selbst erfolgt in zwei Stufen. Durch die Verkürzung von der ersten zur zweiten Stufe, wird ein Korrekturwert erforderlich, der dafür sorgt, daß innerhalb der Tabelle nur um eins unterschiedliche Werte für mögliche Doppelwerte auftreten. Vorzugsweise wird dieser Korrekturwert in die Tabelle miteingearbeitet. Die Tabelle enthält nur positive Quotienten, wodurch kein zusätzlicher Hardware-aufwand für z.B. einen gespiegelten Tabellenteil notwendig ist. An Stellen der Tabelle, an denen ein Doppelwert für den Quotienten möglich ist, steht stets der kleinere der beiden Werte. Damit treten keine negativen Dividendenwerte während des Divisionsablaufes auf. Als Folge hiervon entfallen die mit dieser Problematik zusammenhängenden Korrekturmaßnahmen bezüglich des Dividenden und des Quotienten. In den Fällen, in denen statt des kleineren Quotienten der größere hätte verwendet werden müssen, erfolgt

3

EP 0 256 455 B1

eine Korrektur automatisch mit dem nächsten Divisionsschritt, in dem die Quotienten mit einer Bitstelle überlappend verknüpft werden. Eine zusätzliche Korrektur ist nur am Schluß des Divisionsablaufes notwendig, wenn für den letzten Quotienten ein Doppelwert aufgetreten ist und der größere Wert verwendet werden hätte müssen.

Eine weitere Steigerung der Verarbeitungsgeschwindigkeit wird dadurch erreicht, daß beim Vorliegen des verkürzten Dividenden sofort die Ermittlung des nächsten Quotienten aus der Tabelle begonnen wird, obwohl die dazugehörige Summen- und Übertragskomponente des unverkürzten Dividenden noch nicht vorliegt.

Die am Schluß eines Divisionsablaufes gegebenenfalls notwendigen Korrekturmaßnahmen nutzen die für den Divisionsablauf benötigte Hardware aus, so daß hierfür keine zusätzliche Hardware benötigt wird.

Vorteilhaft ist es, wenn an Stellen der Tabelle, die im fehlerfreien Fall nicht benutzt werden, fehlererkennende Werte stehen.

Die zur Durchführung des Verfahrens geeignete Schaltungsanordnung entsprechend Patentanspruch 6 benötigt keine komplizierten Vergleichs-, Korrektur- oder Vorausschauschaltungen, sie kommt mit wenigen Registern aus und weist deshalb eine einfache Schaltungsstruktur auf. Die gesamte Schaltungsanordnung ist gemäß ihrer auszuführenden Funktionen in drei Schaltungsteile aufgeteilt, die unabhängig voneinander als eigenständige Bausteine in den verschiedensten Technologien mit dem davon abhängigen günstigsten Aufbau bezüglich Chipfläche und Laufzeiten herstellbar sind. Der Schaltungsteil, der die Division der langen Operanden ausführt, ist durch Verwenden eines aus Carry-Save-Adder aufgebauten Wallace-Tree-Adder mit gleichartigen Zellen beliebiger Anzahl aufbaubar, wodurch die Erweiterung der Divisionseinrichtung zum Verarbeiten längerer Operanden in einfacher Weise durch Anfügen weiterer gleichartiger Zellen, ohne den vorhandenen Teil der Schaltungsanordnung neu gestalten zu müssen, möglich ist. Für die Ermittlung der Teilquotienten durch den die Division der verkürzten Operanden ausführenden Schaltungsteil genügt eine einfache Tabelle mit Matrixstruktur, und der jeweils den Teilquotienten mit dem letzten Gesamtteilquotienten zusammenfassende Schaltungsteil benötigt nur wenige Bauelemente, weil beim Zusammenfassen automatisch eine Korrektur des letzten Teilquotienten durchgeführt wird und deshalb eine spezielle Korrektureinrichtung entfällt. Durch den einfachen Gesamtaufbau der Dividiereinrichtung können zur Vermeidung von äußeren Störeinflüssen und zur Vermeidung von Laufzeiten und daraus resultierenden Laufzeitverzerrungen die Datenwege kurz gehalten werden.

Vorteilhafte Ausgestaltungen der Erfindung sind Gegenstand der weiteren Patentansprüche.

Ein Ausführungsbeispiel der Erfindung wird anhand der Zeichnung erläutert. Darin zeigt
FIG 1 den dem Verfahren zur Division beliebig langer Operanden gemäß der Erfindung zugrundeliegenden Divisionsalgorithmus in schematischer Darstellung,
FIG 2 ein Divisionsbeispiel gemäß dem Divisionsalgorithmus nach FIG 1,
FIG 3 die dem Divisionsbeispiel in FIG 2 zugrundegelegte Tabelle mit Teilquotienten,
FIG 4 ein Blockschaltbild der Divisionseinrichtung gemäß der Erfindung,
FIG 5 den Zellenaufbau einer Zelle des Divisions-Schaltungsteils der Divisionseinrichtung nach FIG 4, und
FIG 6 eine schematische Darstellung zeitlicher Verhältnisse innerhalb des Teilquotientenermittlungs-Schaltungsteils und des Divisions-Schaltungsteil einer Divisionseinrichtung nach FIG 4 und 5.

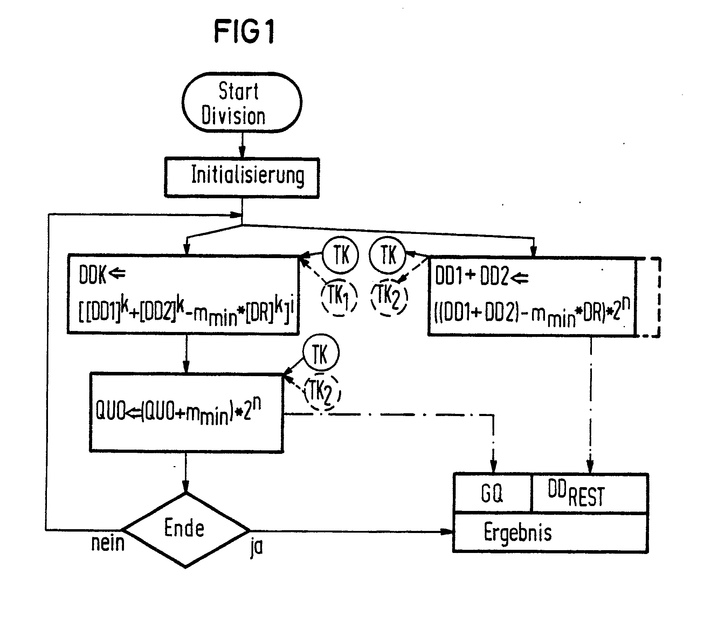

FIG 1 zeigt den dem Verfahren gemäß der Erfindung zugrundeliegenden Divisionsalgorithmus in Form eines Flußdiagramms. Auch wenn der Divisionsalgorithmus grundsätzlich für Operanden mit beliebiger Basis Gültigkeit hat, beziehen sich alle nachfolgenden Aussagen auf Operanden mit der Basis zwei.

Der Divisionsalgorithmus weist eine Initialisierungsphase und eine Ausführungsphase auf. In der Initialisierungsphase wird die nach dem in FIG 1 angegebenen Divisionsalgorithmus arbeitende Divisionseinrichtung zunächst in einen Grundzustand versetzt. Anschließend werden die Operanden, namentlich der Dividend DD und der Divisor DR, geladen. Der Dividend DD ist dabei in die Übertragskomponente DD1 und in die Summenkomponente DD2 aufgeteilt, für die gilt:

$$DD = DD1 + DD2.$$

Die Absolutbeträge der Operanden werden so geladen, daß gilt:

$DD1 := 0$
$DD2 := |Dividend|$
$DR := |Divisor|$
$QUO := 0$

mit

4

$$0 \leq (DD1 + DD2) < DR \times 2^{n+1}$$

und

n = Anzahl der Quotientenbits, um die der jeweils gültige Quotient QUO pro Divisionsschritt erweitert wird.

Im Ausführungsbeispiel wird der Quotient QUO pro Divisionsschritt um n = 2 Quotientenbits erweitert. Die Ungleichung für die Dividendenkomponenten DD1 und DD2 gibt ferner die Initialisierungsbedingung an, die zu Beginn der Division erfüllt sein muß.

Die in der Ausführungsphase durchgeführten arithmetischen Operationen bilden zusammen einen einzelnen Divisionsschritt. Es sind dies die arithmetischen Operationen:

$$DD1+DD2 \Leftarrow ((DD1+DD2)-m_{min} * DR) * 2^n,$$

$$DDK \Leftarrow [[DD1]^k + [DD2]^k - m_{min} * [DR]^k]^i,$$

$$QUO \Leftarrow (QUO+m_{min}) * 2^n.$$

$m_{min}$ ist der aus einer Tabelle T gewonnene Multiplikationsfaktor zur Bildung eines Divisorvielfachen, das von dem jeweils einen Divisionsschritt vorher ermittelten unverkürzten Dividenden DD und vom auf k Bitstellen verkürzten Dividenden $DD^k$ zur Gewinnung eines neuen unverkürzten Dividenden DD und eines neuen auf fünf Bitstellen verkürzten Dividenden DDK subtrahiert wird. Der Multiplikationsfaktor $m_{min}$ ist dabei im Falle möglicher Doppelwerte $m_{min}/m_{max}$ an verschiedenen Stellen der Tabelle jeweils der kleinere der beiden angegebenen Werte. Allgemein ist m der Wert des n + 1-stelligen binären Multiplikationsfaktors, für den gilt:

$$0 \leq m < 2^{n+1}.$$

Der Multiplikationsfaktorwert m ist gleichzeitig der pro Divisionsschritt gesuchte Teilquotient.

Insgesamt wird die Division zeitgleich zweimal ausgeführt, und zwar einmal mit den unverkürzten Operanden DD und DR und einmal mit den verkürzten Operanden $DD^k$ und $DR^k$. k gibt die Anzahl der höchstwertigen Bitstellen des unverkürzten Dividenden DD an, auf die der zur Berechnung des auf die fünf höchstwertigen Bitstellen (i = 5) des unverkürzten Dividenden DD beschränkte verkürzte Dividend DDK verwendete Dividend $DD^k$ beschränkt ist. Im Ausführungsbeispiel wird hierfür ein Dividend mit der Länge k = 8 verwendet.

Die Division der verkürzten Operanden dient zur Gewinnung der einzelnen Multiplikationsfaktoren $m_{min}$ bzw. Teilquotienten. Dadurch ist die Multiplikations- bzw. Teilquotientenermittlung unabhängig von den tatsächlichen Operandenlängen.

Zur endgültigen Berechnung des neuen unverkürzten Dividenden DD wird das Subtraktionsergebnis der Subtraktion des Divisorvielfachen vom alten unverkürzten Dividenden DD noch mit dem Faktor $2^n$ multipliziert. Dies entspricht einer Stellenverschiebung um n Stellen, um die der unverkürzte Dividend pro Divisionsschritt vor der Ausführung des nächsten Divisionsschrittes zu verschieben ist.

Die einzelnen Multiplikationsfaktoren $m_{min}$ werden zu den jeweils gültigen Quotienten QUO mit einer überlappenden Bitstelle addiert. Der alte Quotient QUO wird dabei durch die beiden niedrigstwertigen Bitstellen des Multiplikationsfaktors $m_{min}$ weitergebildet und durch die höchstwertige Bitstelle gegebenenfalls korrigiert. Die Korrektur ist notwendig, da die Multiplikationsfaktoren $m_{min}$ bzw. die Teilquotienten aufgrund der Ermittlung mit verkürzten Operanden eine Unsicherheit in ihrer Aussage aufweisen. Zum Erhalt des für den nächsten Divisionsschritt aktuell gültigen Quotienten QUO wird dieser ebenfalls noch mit dem Faktor $2^n$ multipliziert.

Bei einer Division wiederholen sich die für einen Divisionsschritt notwendigen arithmetischen Operationen solange, bis ein Endekriterium erfüllt ist. Ein Endekriterium ist erfüllt, wenn z. B. die Division abgebrochen werden soll, wenn die Division über die vollständige Operandenlängen durchgeführt ist oder wenn die vorgegebene Genauigkeit des Divisionsergebnisses erreicht ist. Ist eines dieser Endekriterien erfüllt, muß geprüft werden, ob der aus der Tabelle T ermittelte maßgeblich letzte Teilquotient mit dem Wert m aus einem möglichen um eins differierenden Doppelwert hervorgegangen ist. In diesem Fall steht das endgültige Quotientenergebnis wegen der Aussageunsicherheit, ob nämlich $m_{min}$ oder $m_{min} + 1$ der

5

richtige Wert für den letzten Teilquotienten ist, noch nicht fest. In den Fällen, in denen ein Doppelwert für den Multiplikationsfaktor $m_{min}$ ermittelt wird, wird stets der kleinere Wert $m_{min}$ für die weiteren Berechnungen verwendet. Ansonsten gilt:

$m = m_{min}$.

Eine Möglichkeit, die Aussageunsicherheit der Werte m zu eliminieren, besteht darin, weitere Divisionsschritte bis zum erstmaligen Auftreten eines Wertes m bzw. $m_{min} \neq 2^n-1$ für den Multiplikationsfaktor auszuführen. Der erste diese Bedingung erfüllende Multiplikationsfaktor beendet die Division, da entweder durch den Multiplikationsfaktor eine Korrektur des maßgeblich letzten Teilquotienten ausgeführt oder aber wegen Vorhandensein wenigstens einer Nullstelle im Multiplikationsfaktor und damit im Teilquotienten eine Korrektur verhindert wird. Eine nachfolgende Quotientenbitkorrektur wirkt sich dann maximal bis zu dieser Nullstelle nicht aber mehr bis zum maßgeblich letzten Teilquotienten aus. Drei Fälle sind zu unterscheiden:

a) $0 \leq m$ bzw. $m_{min} < (2^n-1)$
b) $(2^n-1) < m$ bzw. $m_{min} 2^{n+1}-1$
c) m bzw. $m_{min} = (2^n-1)$.

Im Fall a) weist die höchstwertige Bitstelle des Teilquotienten eine Null auf. Es erfolgt keine Korrektur des maßgeblich letzten Teilquotienten. Das endgültige und richtige Quotientenergebnis QUO steht damit fest.

Im Fall b) weist die höchstwertige Bitstelle des Teilquotienten eine 1 auf. Damit wird der maßgeblich letzte Teilquotient korrigiert. Mit der Korrektur des maßgeblich letzten Teilquotienten steht das endgültige und richtige Quotientenergebnis QUO fest.

Im Fall c) kann die Division abgebrochen werden, wenn die Anzahl der zusätzlichen Divisionsschritte plus die Anzahl der 1er in der auftretenden 1er-Folge die maximale Anzahl der 1er in einer Sequenz übersteigt. Wie sich mathematisch zeigen läßt, produzieren endliche Operanden nur endliche Sequenzen von 1er im Quotienten. Anschließend erfolgt eine Korrekturaddition mit dem Wert 1, um das endgültige richtige Quotientenergebnis QUO zu erhalten. Einen Sonderfall stellen an sich ein glattes Ergebnis liefernde Integerzahlen dar. Hier kann es sein, daß im Quotienten eine stetige Folge von 1er im Quotienten auftreten. Die bekannten Regeln sind hier anzuwenden.

Eine weitere Möglichkeit, die Aussageunsicherheit der Multiplikationsfaktorwerte m zu eliminieren, ist, noch genau einen Divisionsschritt mit einem fest eingestellten Teilquotienten unabhängig von dem aus der Tabelle T gelesenen Teilquotienten durchzuführen. Es handelt sich dabei um den kleinsten aller eine Korrektur bewirkender Teilquotienten. Im Ausführungsbeispiel ist das der Wert

$m = 2^n = 4$.

Zu prüfen ist, ob der neu entstehende Dividendenrest $DD_{REST}$ positiv ist. Ist der Dividendenrest positiv, war der maßgeblich letzte Teilquotient zu klein und es muß eine Korrektur um plus 1 ausgeführt werden. Diese Art der Elimination der Aussagenunsicherheit erfordert nur einen geringen zusätzlichen Hardwareaufwand für einen Vergleich des Dividendenrestes, da für die Berechnung des Dividendenrestes die bereits vorhandene Hardware ausgenutzt werden kann.

Am Ende der Division steht das Ergebnis in Form eines Quotienten GQ und eines Restes $DD_{REST}$ fest.

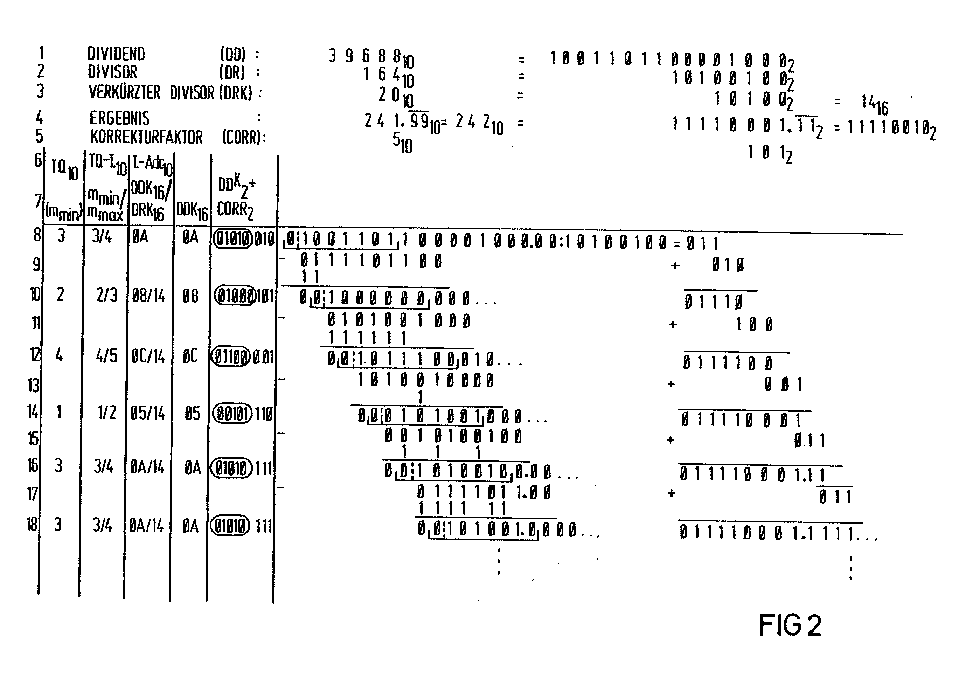

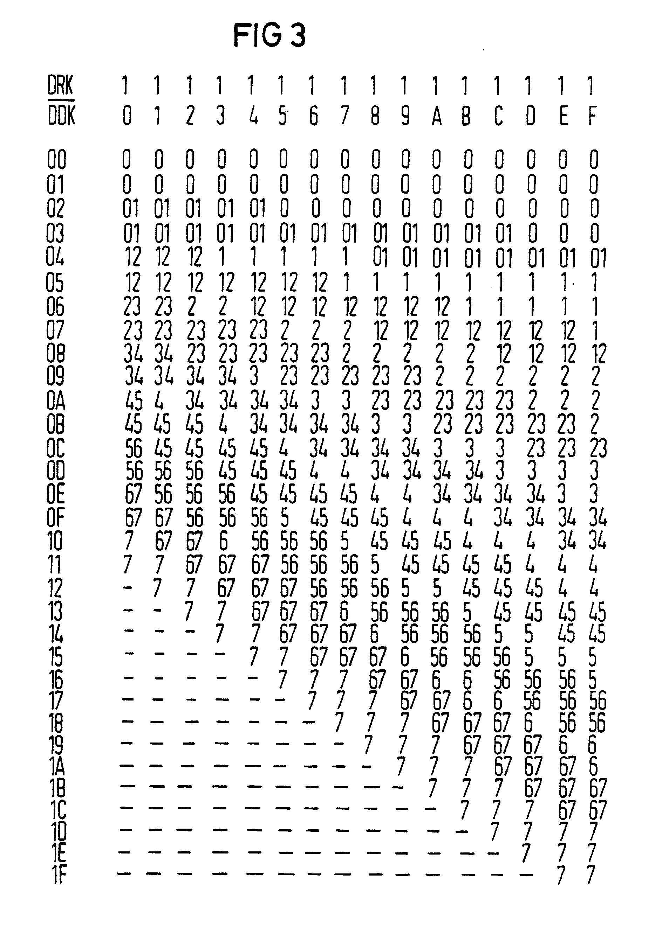

In FIG 2 ist in Verbindung mit der in FIG 3 abgebildeten Tabelle T ein Divisionsbeispiel ausgeführt. Das Divisionsbeispiel soll insbesondere das Divisionsprinzip verdeutlichen. Hierzu werden die in Zeile 1 und 2 der FIG 2 angegebenen Operanden miteinander dividiert. In Zeile 3 steht der auf die fünf höchstwertigen Bitstellen des unverkürzten Divisors DR beschränkte verkürzte Divisor DRK. In Zeile 4 ist das Divisionsergebnis angegeben. Aufgabe und Funktion des in Zeile 5 stehenden und bei der Division pro Divisionsschritt berücksichtigten Korrekturwertes CORR wird im Zusammenhang mit der Aufstellung der die Teilquotienten TQ mit Wert m bzw. $m_{min}$ enthaltenen Tabelle T erläutert. Der Korrekturwert CORR wird pro Divisionsschritt zum verkürzten Dividenden DDK addiert, um die durch die Verkürzung der Operanden hervorgerufene Rechenungenauigkeit in einem vorgegebenen Rahmen zu halten. Im Ausführungsbeispiel gilt für den Korrekturwert CORR:

CORR = 5.

Die in Zeile 1 bis 5 angegebenen Zahlen sind sowohl als Dezimalzahlen als auch als Binärzahlen dargestellt.

Nachdem die Divisionseinrichtung in den Grundzustand gebracht ist, werden die für die Division relevanten unverkürzten Operanden DD und DR in die entsprechenden Register geladen. Gleichzeitig werden die acht höchstwertigen Bitstellen des Divisors DR in ein speziell dafür vorgesehenes weiteres Register geschrieben. Der auf acht Bitstellen verkürzte Divisor DR wird während der Division zur Ermittlung des jeweils am Ende eines Divisionsschrittes gültigen fünf Bitstellen aufweisenden verkürzten Dividenden DDK verwendet. Die fünf höchstwertigen Bitstellen des verkürzten Divisors bilden zusammen mit dem verkürzten Dividenden DDK eine Adresse für die in FIG 3 abgebildete Tabelle T.

In Zeile 8 und 9, rechte Seite, ist der Ausgangszustand für den ersten Divisionsschritt dargestellt. Aus dem unverkürzten Dividenden DD wird unter Berücksichtigung der Initialisierungsbedingung der unterstrichene zunächst auf acht Bitstellen beschränkte Dividend $DD^k$ entnommen. Zu diesem verkürzten Dividenden $DD^k$ wird der Korrekturwert CORR an den drei niedrigstwertigen Bitstellen addiert. Die fünf höchstwertigen Bitstellen dieses Dividenden, die den verkürzten Dividenden DDK bilden, und die fünf höchstwertigen Bitstellen des verkürzten Divisors DRK bilden zusammen die Adresse $DDK_{16}/DRK_{16}$ für die in FIG 3 angegebene Tabelle T. Der verkürzte Dividend DDK bildet dabei den höherwertigeren Teil der Tabellenadresse.

Die Tabellenadresse wählt in der Tabelle T den in Zeile 8, Spalte 2, angegebenen Doppelwert $m_{min}/m_{max}$ als Teilquotienten TQ aus. Für die Berechnung des neuen unverkürzten und verkürzten Dividenden DD, DDK wird der kleinere Wert $m_{min}$ des Doppelwertes verwendet. Es wird der auf acht Bitstellen verkürzte Divisor mit dem Wert $m_{min}$ multipliziert und das Produkt vom alten auf die höchstwertigen Bitstellen beschränkten unverkürzten Dividenden subtrahiert. Im Ausführungsbeispiel ist der auf acht Bitstellen verkürzte Divisor identisch mit dem unverkürzten Divisor.

Für die höchstwertigen Bitstellen des neuen Dividenden ergibt sich als Ergebnis der in Zeile 10 angegebene Dividend. Der bei dieser Berechnung zur Multiplikation des verkürzten Divisors verwendete Wert $m_{min}$, der auch den Teilquotienten TQ bildet, wird unter Berücksichtigung der Stellenwertigkeit zum Inhalt des Quotientenregisters addiert. Gleichzeitig zur Berechnung des auf höhere Bitstellen beschränkten Dividenden DDK wird durch Multiplikation des Wertes $m_{min}$ mit dem unverkürzten Divisor DR und Subtraktion des daraus resultierenden Produktes vom alten unverkürzten Dividenden DD der neue unverkürzte Dividend DD ermittelt. Dieser Sachverhalt wird z. B. in Zeile 10 durch die Punkte angedeutet. Für den nächsten Divisionsschritt werden die Dividenden stellenverschoben, dargestellt z. B. in Zeile 10 durch die senkrecht gestrichelte Linie.

Bevor der ab Zeile 10 beginnende zweite Divisionsschritt abläuft, muß noch die Berechnung des verkürzten Dividenden DDK vervollständigt werden. Dazu werden zu den in Zeile 10 durch eine Klammer zusammengefaßten ausgewählten acht Bitstellen des auf die höchstwertigen Bitstellen beschränkten unverkürzten Dividenden der Korrekturwert CORR addiert und das Ergebnis auf die fünf höchstwertigsten Bitstellen beschränkt. Der weitere Divisionsablauf für den zweiten Divisionsschritt erfolgt dann wie ab Zeile 8 für den ersten Divisionsschritt beschrieben.

Der in Zeile 12 beginnende dritte Divisionsschritt liefert für den Teilquotienten TQ den Wert $m_{min} = 4$, der eine Korrektur des im zweiten Divisionsschritt ermittelten Teilquotienten TQ bewirkt. Beim zweiten Divisionsschritt lieferte die Tabelle T für den Teilquotienten TQ den in Zeile 10, zweite Spalte, eingetragenen Doppelwert $m_{min}/m_{max}$, von denen der kleinere Wert $m_{min}$ für die nachfolgenden Berechnungen verwendet wurde. In diesem Fall hätte aber der größere Wert $m_{max} = m_{min} + 1$ zur weiteren Berechnung verwendet werden müssen. Die Korrektur des zu kleinen Teilquotienten TQ erfolgt durch die 1 in der höchstwertigsten Bitstelle des in diesem Divisionsschritt ermittelten Teilquotienten TQ bei der Addition zum bis dahin gültigen Gesamtteilquotienten.

Der ab Zeile 14 beginnende vierte Divisionsschritt liefert für den Teilquotienten TQ den Wert $m_{min} = 1$, der wieder aus einem Doppelwert $m_{min}/m_{max}$ hervorgeht. Mit dem vierten Divisionsschritt wäre für dieses Divisionsbeispiel die Division unter der Voraussetzung, daß keine Stellen nach dem Komma berechnet werden sollen, abgeschlossen. Da für den maßgeblich letzten Teilquotienten TQ ein Doppelwert $m_{min}/m_{max}$ zur Auswahl gestanden hat, muß noch geprüft werden, ob nicht der größere Wert $m_{max}$ für die Berechnung des Dividendenrestes verwendet werden muß.

Zur Überprüfung, ob der größere Wert $m_{max}$ der richtige Wert ist, werden ab Zeile 16 zwei weitere Divisionsschritte ausgeführt. Danach wird ersichtlich, daß stets der Wert $m = 3_{10}$ für den Teilquotienten TQ als Lösung ermittelt wird. In diesem Fall muß eine Korrekturaddition zum Gesamtquotienten ausgeführt werden. Das richtige Endergebnis ist der Zeile 4 zu entnehmen.

Zum Aufstellen der in FIG 3 abgebildeten Tabelle T mit binär dreistelligen Teilquotienten TQ bzw. Multiplikationsfaktoren m mit m = TQ sind jeweils die fünf höchstwertigen Bitstellen des Dividenden DD und Divisors DR ausreichend. Den nachfolgenden Betrachtungen sind zweckdienlicherweise folgende Schreibweisen bzw. Wertigkeiten der Binärstellen der Operanden zugrundegelegt:

DDK := *****.
DDK ∈ {0, 1, 2, 3, ..., 28, 29, 30, 31}
DRK := 1*.***
DRK ∈ {2, 2 1/8, 2 2/8, ..., 3 5/8, 3 6/8, 3 7/8}.

Der Divisor DRK ist bei der Division bitnormalisiert und weist deshalb eine führende 1 auf. Damit sind im wesentlichen für die Teilquotientenbestimmung nur die neun mit Stern gekennzeichneten Bitstellen der Operanden maßgebend. Der verkürzte Dividend DDK kann demnach in dezimaler Schreibweise Werte zwischen 0 und 31, und der verkürzte Divisor DRK Werte zwischen 2 und 3 7/8 mit einem Inkrement von 1/8 annehmen. In hexadezimaler Schreibweise sind das die Werte zwischen 00 und 1F für den verkürzten Dividenden DDK und 10 bis 1F für den verkürzten Divisor DRK. Die hexadezimalen Dividendenwerte bilden die Zeilenadresse und die hexadezimalen Divisorwerte die Spaltenadresse der Tabelle T. An den Kreuzungspunkten zweier Adreßkomponenten stehen die zu der Adreßkombination gehörenden Teilquotienten mit dem Wert m. Für m sind nur Werte zwischen 0 und 7 erlaubt. An Stellen, die diese Werte übersteigen, sind keine Teilquotienten eingetragen, da es sich hierbei um Vielfache dieser Werte handelt. Bei Auftreten einer Adreßkombination, die auf solche Stellen zugreift, ist die Konvergenzbedingung

$$DD < DR \times 8$$

verletzt. Sie werden deshalb dazu benutzt, Fehler im Divisionsablauf anzuzeigen. Bei den in der Tabelle T eingetragenen Werten handelt es sich um die ganzzahligen Quotienten der nach obiger Schreibweise aufgefaßten fünf Bitstellen aufweisenden Operanden, wobei gedanklich ein Maximalwert und ein Minimalwert nach dem Komma berücksichtigt sind. Aus diesem Grund sind an manchen Stellen der Tabelle T Doppelwerte für die ganzzahligen Quotienten möglich. Folgende drei Fälle sind in der Taelle T zu unterscheiden. Gilt:

$$[TQ_{min}]^3 = [TQ_{max}]^3,$$

werden die Teilquotienten TQ exakt vorhergesagt. Die Exponenten geben die Anzahl der Binärstellen an. Gilt:

$$[TQ_{min}]^3 + 1 = [TQ_{max}]^3,$$

enthalten die vorhergesagten Teilquotienten TQ die erlaubte Unsicherheit von 1. In diesem Fall wird für die weiteren Berechnungen der kleinere Teilquotient TQ verwendet. Hätte der größere Teilquotient verwendet werden müssen, wird diese Unsicherheit durch den oder einen der nächsten Teilquotienten TQ korrigiert. Gilt:

$$[TQ_{min}]^3 + 1 < [TQ_{max}]^3,$$

sind diese Fälle gemäß des Divisionsalgorithmus nicht erlaubt und führen zu fehlerhaften Ergebnissen. Um diese Fälle auszuschließen, wird für die Aufstellung der Tabelle T ein Korrekturwert CORR berücksichtigt. Ohne diesen Korrekturwert CORR können in der Tabelle T Doppelwerte auftreten, die um mehr als den Wert 1 differieren. Da durch die Überlappung der höchstwertigen Bitstellen der Teilquotienten TQ und des jeweilig gültigen Gesamtteilquotienten jedoch immer nur eine Korrektur um den Wert 1 ausgeführt werden kann, dürfen sich die Doppelwerte nicht mehr als um den Wert 1 unterscheiden. Durch die Addition des Korrekturwertes CORR zu den verkürzten Dividenden DDK vor der Division der Operanden, werden die Teilquotientenintervalle derart aus ihrer Lage verschoben, daß die auftretenden Doppelwerte den erlaubten Intervallbereich nicht überschreiten. Für die Teilquotientenintervalle der Teilquotienten gilt:

$$DD_{min}/DR_{max} < TQ < DD_{max}/DR_{min}.$$

Daraus folgt:

$$TQ_{min} = DD_{min}/DR_{max} \quad und$$

$TQ_{max} = DD_{max}/DR_{min}.$

Für den fünf Bitstellen aufweisenden verkürzten Divisor DRK gilt:

$DR-1/8 < DRK \leq DR$

Daraus folgt:

$DR_{min} = DR-1/8$
$DR_{max} = DR.$

Die Ermittlung des fünf Bitstellen aufweisenden verkürzten Dividenden DDK erfolgt ausgehend von dem auf acht Bitstellen reduzierten Dividenden $[DD]^8$ auf folgende Weise:

$DDK = [([DD1]^8 + [DD2]^8 - [m \times DR]^8) \times 4 + CORR]^5.$

Dabei ist

$[m \times DR]^8 = [m_0 \times DR \times 4]^8 + [m_1 \times DR \times 2]^8 = [m_2 \times DR \times 1]^8$ mit
$m = m_0 \times 4 + m_1 \times 2 + m_2 \times 1.$

Dabei bedeuten:

$m_0 \in \{0,1\}$
$m_1 \in \{0,1\}$
$m_2 \in \{0,1\}.$

Die Verminderung der Genauigkeit von acht auf fünf Bitstellen führt zu folgenden Abweichungen:

$$4 \times DD1 - 1/8 < 4 \times [DD1]^8 \leq 4 \times DD1$$
$$4 \times DD2 - 1/8 < 4 \times [DD2]^8 \leq 4 \times DD2$$
$$16 \times m_0 \times DR - 1/8 < 4 \times [m_0 \times DR \times 4]^8 \leq 16 \times m_0 \times DR$$
$$8 \times m_1 \times DR - 1/8 < 4 \times [m_1 \times DR \times 2]^8 \leq 8 \times m_1 \times DR$$
$$4 \times m_2 \times DR - 1/8 < 4 \times [m_2 \times DR \times 1]^8 \leq 4 \times m_2 \times DR$$
$$4 \times m \times DR - 3/8 < 4 \times [m \times DR]^8 \leq 4x \, m \times DR.$$

Daraus ergibt sich für den minimalen bzw. maximalen Dividenden folgende Abschätzung:

$([DD1]^8 + [DD2]^8 - [m \times DR]^8) \times 4 + CORR - 7/8 < DDK \leq ([DD1]^8 + [DD2]^8 - [m \times DR]^8) \times 4 + CORR.$

Nach Einsetzen der zuvor ermittelten maximalen und minimalen Ausdrücke in die einzelnen Komponenten der obigen Abschätzung ergibt sich die Beziehung:

$(4 \times DD1-1/8) + (4 \times DD2-1/8)-4 \times m \times DR + CORR-7/8 < DDK < 4 \times DD1 + 4 \times DD2-(4 \times m \times DR-3/8) + CORR,$

und daraus für den minimalen und maximalen Dividenden

$DD_{min} > DD + CORR-11/8$ bzw.
$DD_{max} < DD + CORR + 3/8.$

Um sicherzustellen, daß der verkürzte Dividend DDK durch Rechenungenauigkeiten nicht negative Werte annimmt, gilt für den Korrekturwert CORR:

$CORR \geqq 1/8.$

Damit der verkürzte Dividend DDK keine Werte annimmt, die mit den fünf Binärstellen nicht darstellbar sind, gilt gleichzeitig:

$DDK < 32.$

Da m nur ein ganzzahliger Wert ist, gilt:

$TQ_{min} \geqq m$     und
$TQ_{max} < m + 2.$

Der Wert m eines Teilquotienten TQ errechnet sich folgendermaßen:

$m = [TQ_{min}]^3.$

Das heißt:

$m = TQ_{min} - \Delta$ ,

wobei dem Inhalt der abgeschnittenen Binärstellen mit der Bedingung entspricht:

$0 \leqq \Delta < 1.$

Aus der Größe des Teilquotientenintervalls

$TQ_{diff} = TQ_{max} - TQ_{min}$

folgt:

$TQ_{min} + TQ_{diff} < m + 2,$   bzw.
$m + \Delta + TQ_{diff} < m + 2,$

und daraus

$TQ_{diff} + \Delta < 2.$

Für

$TQ_{diff} \leqq 1$

ist die letzte Bedingung erfüllt. Für

$TQ_{diff} \geqq 2,$

ist die Bedingung nicht erfüllt. In den Fällen

$1 < TQ_{diff} < 2$

ist eine Aussage nur in Abhängigkeit von $\Delta$ möglich.

Die größe des Vorhersageintervalls der Teilquotienten beträgt maximal

$$TQ_{diff\ max} = \frac{12 \times DR + DD + CORR - 1\ 1/8}{(8 \times DR - 1) \times DR} = 1\ 1/3$$

mit

$DR_{min} = 2$

$DD_{max} \approx DR \times 8 = 16$ und

$CORR_{max} = 1\ 1/8$.

Da

$TQ_{diff\ max} > 1$

werden kann, sind für die Teilquotienten der tabelle T in Verbindung mit einem $\Delta \rightarrow 1$ Doppelwerte möglich, die um mehr als 1 differieren. Berechnungen der Tabelle T mit Korrekturwerten CORR von 0/8 bis 9/8 mit einem der Auflösung der Dividendenkomponenten DD1, DD2 angepaßten Inkrement von 1/8 zeigen, daß die mit den Korrekturwerten CORR 3/8, 4/8, 5/8, 6/8 und 7/8 berechneten Tabellen T keine mehr als um 1 differierende Doppelwerte aufweisen. Größere Korrekturwerte CORR verschieben die Lagen der Intervalle lediglich um ganzzahlige Vielfache, so daß dadurch das Gesamtergebnis nicht verändert wird.

Der in FIG 3 abgebildeten Tabellle T ist der Korrekturwert CORR = 5/8 zugrundegelegt.

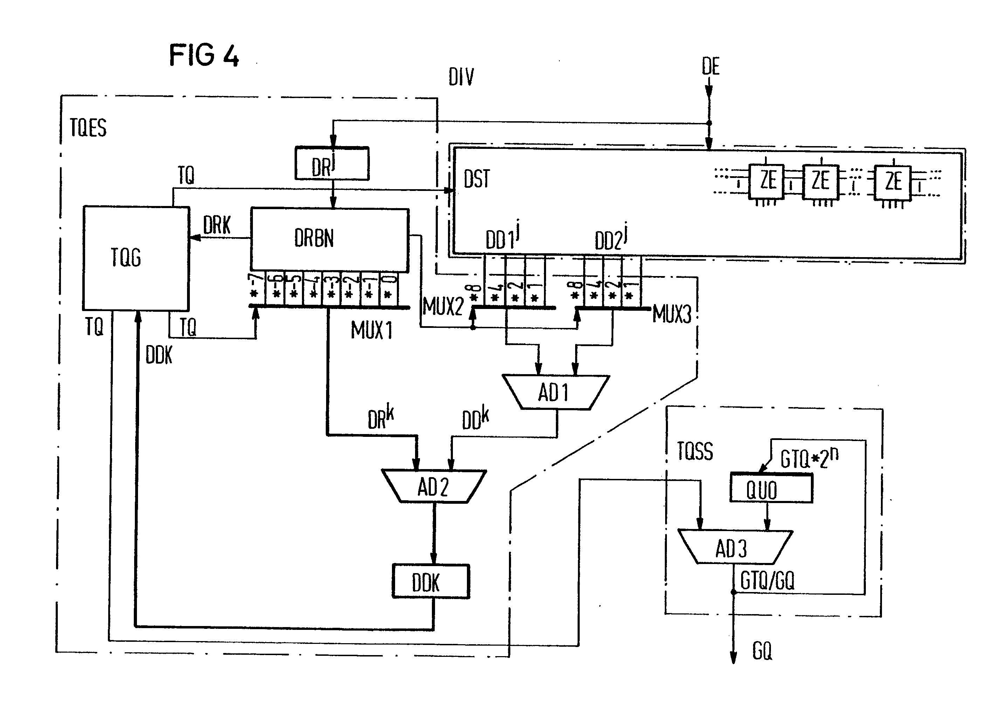

Die in FIG 4 dargestellte Schaltungsanordnung der Divisionseinrichtung DIV zur Durchführung des Verfahrens weist drei Schaltungsteile auf. Es sind dies ein Divisions-Schaltungsteil DST, in dem die unverkürzten Operanden verarbeitet werden, ein Teilquotientenermittlungs-Schaltungsteil TQES zur Ermittlung der Teilquotienten unter Verwendung verkürzter Operanden, und ein Teilquotientensummations-Schaltungsteil TQSS zum Aufsummieren der einzelnen Teilquotienten. Der Divisionseinrichtung DIV werden die Operanden DD und DR digitorientiert über den Eingang DE zugeführt.

Der Divisions-Schaltungsteil DST besteht aus einer beliebigen Anzahl gleichartiger nebeneinander anordbarer Zellen ZE, deren seitlich herausgeführten Ausgänge unmittelbar mit den parallel gegenüberliegenden Eingängen benachbarter Zellen ZE verbindbar sind. Nach oben weisen die Zellen ZE einen Dateneingang und nach unten Datenausgänge auf. Zusammen bilden die Zellen ZE an ihren Ausgängen den pro Divisionsschritt neu berechneten unverkürzten Dividenden, DD, der in eine Übertragskomponente DD1 und in eine Summenkomponente DD2 aufgeteilt ist, ab. Jeweils die elf höchstwertigen Bitstellen der Dividendenkomponenten werden mit den Faktoren 1, 2, 4 und 8 multipliziert und vom Divisions-Schaltungsteil DST bereitgestellt.

Der Teilquotientenermittlungs-Schaltungsteil TQES weist ein elfstelliges Divisorregister $DR^j$ $(j = 11)$ auf, in das die höchstwertigen Bitstellen des unverkürzten Divisors DR digitorientiert eingeschrieben werden. Ein nachgeschalteter Divisorbitnormalisierer DRBN führt anschließend eine Bitnormalisierung des im Divisorregister $DR^j$ stehenden Divisors durch, d. h. er wird solange z. B. nach links verschoben, bis an der nächsten Digitgrenze eine führende 1 anliegt. Der bitnormalisierte und schließlich auf acht Bitstellen beschränkte Divisor $DR^k$ wird mit den Faktoren 0 bis 7 vervielfacht. Die Ergebnisse werden komplementiert und dem Auswahlschalter MUX1 zur Auswahl eines dieser Divisorvielfachen zugeführt. Die beim Bitnormalisieren entstehende Schiebeamplitude steuert parallel die Auswahlschalter MUX2 und MUX3, von denen der Auswahlschalter MUX2 zwischen dem Ein-, Zwei-, Vier- oder Achtfachen der Dividendenübertragskomponente $DD1^j$, und der Auswahlschalter MUX3 zwischen dem Ein-, Zwei-, Vier- oder Achtfachen der Dividendensummenkomponente $DD2^j$ auswählt. Damit bleibt der Gesamtquotient GQ für die Division unbeeinflußt, weil sowohl der digitorientiert in das Divisorregister $DR^j$ eingeschriebene Divisor als auch die verkürzten Dividendenkomponenten $DD1^j$ und $DD2^j$ um den gleichen Faktor 1x verschoben werden. Es gilt:

$$\frac{DD1^j + DD2^j}{DR^j} = \frac{DD1^j \times 2^x + DD2^j \times 2^x}{DR^j \times 2^x} \qquad \text{mit } 0 \leq x < 4$$

Die fünf höchstwertigen Bitstellen des bitnormalisierten auf acht Bitstellen beschränkten Divisors $DR^k$

bilden den unteren Adreßteil DRK für die Tabelle T des Teilquotientengenerators TQG. Die Auswahlschalter MUX2 und MUX3 sind mit einem nachfolgenden ersten Addierer AD1 verbunden, der die von den Auswahlschaltern MUX2 und MUX3 ausgewählten Vielfachen der Dividendenkomponenten $DD1^j$ und $DD2^j$ addiert und das Ergebnis auf acht Bitstellen beschränkt. Das auf acht Bitstellen beschränkte Ergebnis $DD^k$ wird einem zweiten Addierer AD2 zugeführt, der es mit dem vom Auswahlschalter MUX1 ausgewählten komplementierten Divisorvielfachen des Divisors $DR^k$ addiert und damit das Divisorvielfache vom auf die acht höchstwertigen Bitstellen beschränkten Dividenden $DD^k$ subtrahiert. Der Addierer AD2 kann dabei so ausgelegt sein, daß er gleichzeitig mit der Addition einen Korrekturwert CORR mit berrücksichtigt. Der Korrekturwert CORR könnte aber auch z. B. von dem Addierer AD1 berücksichtigt werden. Das auf fünf Bitstellen reduzierte Ergebnis des Addierers AD2 wird in das Dividendenregister DDK geschrieben. Der verkürzte Dividend DDK bildet den oberen Adreßteil für die Tabelle T des Teilquotientengenerators TQG.

Der eine Tabelle T enthaltende Teilquotientengenerator TQG liefert in Abhängigkeit der verkürzten Operanden DDK und DRK einen Teilquotienten TQ mit dem Wert m bzw. $m_{min}$, der die Vielfachenauswahl eines Divisorvielfachen im Teilquotientenermittlungs-Schaltungsteil TQES durch den Auswahlschalter MUX1 sowie die Vielfachenauswahl im Divisions-Schaltungsteil DST steuert. Ferner wird der Teilquotient TQ dem Teilquotientensummations-Schaltungsteil TQSS zugeführt.

Der Teilquotientensummations-Schaltungsteil TQSS weist einen Addierer AD3 auf, der die jeweiligen Teilquotienten TQ zum alten Gesamtteilquotienten GTQ addiert. Der Teilquotientensummations-Schaltungsteil TQSS könnte z. B. auch aus einem Schieberegister bestehen, das in Abhängigkeit von der höchstwertigen Bitstelle des Teilquotienten TQ auf die niedrigstwertige Bitstelle eine 1 addiert und anschließend unter Nachschieben der beiden niedrigstwertigen Stelle des Teilquotienten TQ den Registerinhalt um zwei Stellen nach links verschiebt.

Über den Ausgang GQ, der gleichzeitig den Divisionseinrichtungsausgang bildet, wird das Divisorergebnis an nachfolgende Komponenten weitergegeben.

Ausgehend von der Ermittlung eines Teilquotienten TQ wird sowohl im Teilquotientenermittlungs-Schaltungsteil TQES als auch im Divisions-Schaltungteil DST ein nächster gültiger Dividend errechnet. Wenn die Dividendenwerte errechnet sind, werden sie in die entsprechenden Register übernommen. Mit der Übernahme der Dividenden in die Register wird jeweils ein neuer Divisionsschritt begonnen.

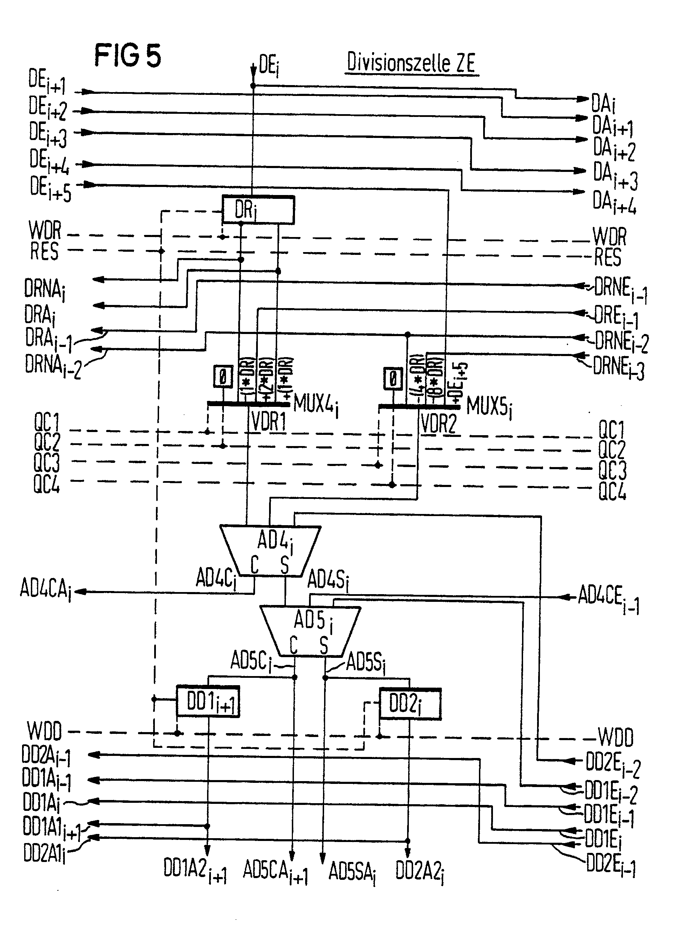

In FIG 5 ist der Aufbau einer einzelnen Zelle ZE abgebildet. Eine beliebige Anzahl solcher Zellen ZE bilden den Divisions-Schaltungsteil DST. Die Zelle ZE nimmt eine Bitstelle des unverkürzten Divisors $DR_i$ und des unverkürzten Dividenden $DD_i$ auf. Damit ist die Anzahl der Zellen ZE proportional zur Länge der Operanden. Der Dividend $DD_i$ wird in der Zelle ZE als Übertragskomponente $DD1_{i+1}$ und als Summenkomponente $DD2_i$ geführt, die durch die aus den Addierern $AD4_i$ und $AD5_i$ bestehende Addierstufe gebildet werden. Eine derart aufgebaute Addierstufe ist auch unter dem Begriff Wallace-Tree-Adder bekannt.

Der Übertragsausgang $AD5C_i$ des Addierers $AD5_i$ ist mit dem Übertragsregister $DD1_{i+1}$ und der Summenausgang $AD5S_i$ ist mit dem Summenregister $DD2_i$ verbunden. Ein Eingang des Addierers $AD5_i$ ist mit dem Summenausgang $AD4S_i$ des Addierers $AD4_i$ verbunden. Der Addierer $AD5_i$ erhält über den Zelleneingang $AD4CE_{i-1}$ die zur Übertragsinformation $AD4C_i$ der Zelle ZE vorher analoge Übertragsinformation, und über den Zelleneingang $DD1E_{i-2}$ die zur Übertragsinformation $DD1_{i+1}$ drei Zellen vorher analoge Übertragsinformation. Der Übertragsausgang $AD5C_i$ und der Summenausgang $AD5S_i$ des Addierers $AD5_i$ sind mit den Zellenausgängen $AD5CA_{i+1}$ und $AD5SA_i$ verbunden. An diese Ausgänge können zusätzliche Hardwarekomponenten, wie z. B. eine Vergleichsschaltung, angeschlossen werden, die als abschließende Tätigkeit einer einmaligen Division mit dem Teilquotienten TQ = 4 am Ende des Divisionsablaufes einen Vergleich zur Überprüfung des Vorzeichens des Dividendenrestes durchführt.

Die Dividendenregister $DD1_{i+1}$ und $DD2_i$ sind zum einen mit den Zellenausgängen $DD1A2_{i+1}$ und $DD2A2_i$ zum Abgriff durch weitere Divisionseinrichtungskomponenten und zum anderen mit den Zellenausgängen $DD1A1_{i+1}$ und $DD2A1_i$ zum Weiterleiten an benachbarte höherwertige Zellen ZE der Dividendenkomponenten verbunden.

Neben diesen Aus- und Eingängen weist die Zelle ZE noch die Ausgänge $DD2A_{i-1}$, $DD1A_{i-1}$, $DD1A_i$ sowie die Eingänge $DD1E_{i-1}$, $DD1E_i$ und $DD2E_{i-1}$ auf. Diese Aus- bzw. Eingänge sind zellenintern mit stufenversetzten Leitungen verbunden, so daß Dividendenbits bei mehrzelligen Anordnungen durch ein, zwei oder drei Nachbarzellen hindurchgeführt werden. Die Dividendenkomponente $DD2_i$ z. B. wird über den Zelleneingang $DD2E_{i-2}$ zwei Zellen ZE weiter links an den Eingang des Addierers $AD4_i$ gelegt.

Neben dem mit dem Zelleneingang $DD2E_{i-2}$ verbundenen Eingang weist der Addierer $AD4_i$ noch zwei jeweils mit einem Ausgang der Auswahlschalter $MUX4_i$ und $MUX5_i$ verbundene Eingänge auf, über die er mit Divisorvielfachen VDR1 und VDR2 versorgt wird. An den Eingängen der Auswahlschalter $MUX4_i$ und $MUX5_i$ liegen zum Teil negiert die Divisorvielfachen beschränkt auf eine Bitstelle an, die vom Divisorregister $DR_i$ abgeleitet und zum Teil durch direkte und zum Teil über benachbarte Zellen ZE indirekte Verbindungen gebildet werden. Die indirekten Verbindungen entstehen im Zusammenhang mehrerer Zellen ZE über die stufenversetzten Leitungen, die mit den Zellenausgängen $DRNA_i$, $DRA_i$, $DRA_{i-1}$ und $DRNA_{i-2}$ sowie mit den Zelleneingängen $DRNE_{i-1}$, $DRNE_{i-2}$ und $DRNE_{i-3}$ verbunden sind. Jeweils ein Eingang der Auswahlschalter $MUX4_i$ und $MUX5_i$ weist fest den Binärwert Null auf, um das Nullfache des Divisors bilden zu können. Der Zelleneingang $DRE_{i-1}$ ist mit einem Eingang des Auswahlschalters $MUX4_i$ verbunden.

Die Auswahlschalter $MUX4_i$ und $MUX5_i$ werden über die Steuerleitungen QC1, QC2, QC3 und QC4 angesteuert, die den vom Teilquotientenermittlungs-Schaltungsteil gelieferten Teilquotienten in codierter Form übertragen. Diese Steuerleitungen sind gerade durch die Zelle ZE geführt, um alle an einem Zellenverbund beteiligten Zellen ZE mit den Steuersignalen zu versorgen.

Neben den die Auswahlschalter $MUX4_i$ und $MUX5_i$ steuernden Steuersignale weist die Zelle ZE noch Steuersignale mit den entsprechend bezeichneten Ein- bzw. Ausgängen auf, mit denen die Register $DR_i$, $DD1_{i+1}$ und $DD2_i$ zurückgesetzt werden, das ist das Steuersignal RES, sowie Steuersignale zum Einschreiben einer Dateninformation in das Divisorregister $DR_i$, das ist das Steuersignal WDR, und zum Einschreiben in die Dividendenregister $DD1_{i+1}$ und $DD2_i$, das ist das Steuersignal WDD, auf.

Über den Dateneingang $DE_i$ werden die Dateninformationen für den Divisor und den Dividenden nacheinander in die Zelle ZE eingelesen. Der Dateneingang $DE_i$ der Zelle ZE ist mit dem Divisorregister $DR_i$ verbunden. Weiter ist der Dateneingang $DE_i$ mit dem Zellenausgang $DA_i$ verbunden, der neben den Zellenausgängen $DA_{i+1}$, $DA_{i+2}$, $DA_{i+3}$ und $DA_{i+4}$ angeordnet ist.

Diesen Zellenausgängen sind parallel gegenüber die Zelleneingänge $DE_{i+1}$, $DE_{i+2}$, $DE_{i+3}$, $DE_{i+4}$ und $DE_{i+5}$ angeordnet. Bis auf den Eingang $DE_{i+5}$, der mit einem Eingang des Auswahlschalters $MUX5_i$ verbunden ist, sind alle anderen Zelleneingänge über stufenversetzte Leitungen mit jeweils einem Zellenausgang der gegenüberliegenden Ausgangsgruppe verbunden. Auf diese Weise wird eine an der Zelle ZE anliegende Dateninformation bei einem Zellenverbund fünf Zellen ZE weiter rechts eingeschrieben. Mit dieser Maßnahme wird erreicht, daß zu Beginn einer Division im verkürzten Dividendenregister DDK des Teilquotientenermittlungs-Schaltungsteilseine anzunehmende falsche Dividendeninformation steht, daß nach einer ersten Division durch Null der richtige verkürzte Dividend DDK in das Dividendenregister geschrieben wird. Dies stellt eine Möglichkeit dar, die Division definiert beginnen zu lassen.

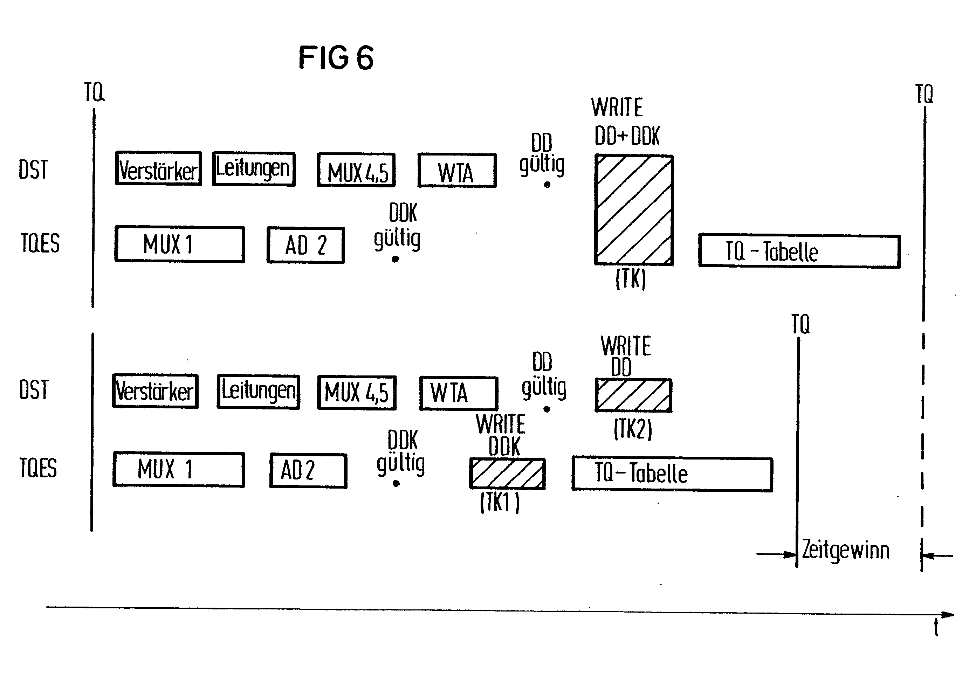

In FIG 6 ist ausgehend vom Vorliegen der Teilquotienteninformation TQ des Teilquotientengenerators bis zum Anliegen des neuen verkürzten und unverkürzten Dividenden DDK und DD an den dazugehörigen Registern eine schematische Darstellung zeitlicher Verhältnisse innerhalb des Teilquotientenermittlungs-Schaltungsteils TQES und des Divisions-Schaltungsteils DST zu sehen. Im Divisions-Schaltungsteil DST wird im wesentlichen die Laufzeit durch die Leitungsverstärker, durch die Leitungslängen, den Auswahlschaltern MUX4 und MUX5 und dem Wallace-Tree-Adder bestimmt. Verstärker sind beim Zellenverbund mit vielen Zellen ZE notwendig, damit die die Auswahlschalter MUX4 und MUX5 steuernden Steuersignale an den von der Einspeisungsstelle der Signale in den Divisions-Schaltungsteil DST am weitest entfernten Zellen ZE noch einen genügend hohen Signalpegel aufweisen. Bei den Leitungslängen sind diejenigen der Leitungen gemeint, die den in Steuersignale für die Multiplexer MUX4 und MUX5 umgewandelten Teilquotienten von der Tabelle T des Teilquotientengenerators wenigstens bis zu den an der Bildung der auf elf Bitstellen beschränkten Dividendenkomponenten $DD1^j$ und $DD2^j$ beteiligten Zellen leiten.

Im Teilquotientenermittlungs-Schaltungsteil TQES wird die Laufzeit im wesentlichen vom Auswahlschalter MUX1 und vom Addierer AD2 bestimmt. Die Reaktionszeiten der Auswahlschalter MUX2 und MUX3 und des Addierers AD4 laufen parallel zur Bereitstellungszeit eines Teilquotienten TQ durch den Teilquotientengenerator ab, die wesentlich kürzer als die Bereitstellungszeit sind. Diese Reaktionszeiten brauchen deshalb nicht berücksichtigt zu werden.

Die Zeiten vom Vorliegen eines Teilquotienten TQ bis zum Anliegen des verkürzten und unverkürzten Dividenden DDK und DD an den entsprechenden Registern ist beim Teilquotientenermittlungs-Schaltungsteil insgesamt kürzer. Bei einer periodischen Einzeltaktsteuerung TK können die Dividenden DDK und DD erst bei gegenseitigem Vorliegen durch den Schreibimpuls in die Register übernommen werden. Unmittelbar nach der Übernahme in die Register wird der nächste Teilquotient TQ durch den Teilquotientengenerator bereitgestellt. Dieser Vorgang erfordert die längste Wartezeit. Durch einen periodischen Doppeltakt TK1 und TK2 wird die Zeitspanne zwischen dem Feststehen des verkürzten Dividenden DDK und dem Feststehen des unverkürzten Dividenden DD dazu genützt, den nächsten Teilquotienten TQ aus der Tabelle T des Teilquotientengenerators vorzeitig vor dem Feststehen des unverkürzten Dividenden zu ermitteln. Insgesamt wird die Zeitspanne vom Vorliegen des Teilquotienten TQ des vorherigen Divisionsschrittes bis zum Vorliegen des Teilquotienten TQ des nächsten Divisionsschrittes verkürzt. Damit wird die Divisionszykluszeit für einen Divisionsschritt verkürzt und der Divisionsablauf beschleunigt.

**Ansprüche**

1. Verfahren zur schnellen Division langer Operanden in Datenverarbeitungseinrichtungen auf der Grundlage von zu Beginn der Division normierten Operanden und einer mit den verkürzten Operanden angesteuerten Tabelle (T) mit den für den jeweiligen Divisionsschritt maßgebenden Teilquotienten (TQ), wobei pro Divisionsschritt ausgehend vom jeweils zuletzt ermittelten unverkürzten Dividenden (DD) durch Subtraktion des Divisorvielfachen, das mit dem maßgebenden Teilquotienten (TQ) gebildet wird, ein neuer unverkürzter Dividend (DD) und gleichzeitig auf entsprechende Weise ein verkürzter Dividend (DDK) ermittelt wird,

   **dadurch gekennzeichnet, daß** der unverkürzte Dividend während des Divisionsablaufes in Komponentendarstellung mit Summen- und Übertragskomponente (DD2, DD1) gehalten wird und nur am Ende des Divisionsablaufes die dann den Rest der Division darstellenden Dividendenkomponenten gegebenenfalls zu einem Gesamtdividenden zusammengefaßt werden, daß der den einen Teil der Ansteueradressen für die Tabelle (T) mit den Teilquotienten (TQ) bildende verkürzte Dividend (DDK) ausgehend von den jeweils gleichsinnig verkürzten Dividendenkomponenten ($DD1^k$, $DD2^k$) und dem gleichsinnig verkürzten Divisor ($DR^k$) schaltungsabhängig zunächst Bitstellen verkürzt in Gesamtdarstellung ermittelt und anschließend nochmals auf i Bitstellen verkürzt wird, daß der den anderen Teil der Ansteueradressen für die Tabelle (T) mit den Teilquotienten (TQ) bildende Divisor (DRK) gleichsinnig zum auf i Bitstellen verkürzten Dividenden (DDK) verkürzt wird, daß die i-Verkürzung der Operanden so gewählt wird, daß die hierdurch bedingte Unsicherheit bei der Vorhersage eines Teilquotienten (TQ), die sich gemäß der Beziehung $DD_{min}/DR_{max} < TQ < DD_{max}/DR_{min}$ mit dem maximalen und minimalen Dividenden und Divisor $DD_{max}$, $DD_{min}$, $DR_{max}$ und $DR_{min}$ des auf i Bitstellen verkürzten Dividenden und Divisors DDK und DRK ergibt, gegebenenfalls unter Berücksichtigung eines Korrekturwertes (CORR) ein Intervall ($TQ_{diff} = TQ_{max}-TQ_{min}$) möglicher Teilquotienten (TQ) solcher Größe verursacht, daß unter Berücksichtigung einer Fehlgröße $\Delta$ mit $0 \leq \Delta < 1$, die durch eine Beschränkung des minimalen Teilquotienten ($TQ_{min}$) auf einen $n + 1$ Bitstellen umfassenden Multiplikationsfaktor m gemäß der Beziehung $m = TQ_{min} - \Delta$ bedingt ist, folgendes Konvergenzkriterium erfüllt ist:

   $$TQ_{diff} + \Delta < 2$$

   daß von den, sich aufgrund des Konvergenzkriteriums an einigen Stellen der Tabelle (T) mit den Teilquotienten (TQ) ergebenden, maximal um den Wert 1 schwankenden Doppelwerten für m der jeweils kleinere Wert ($m_{min}$) als Teilquotienten (TQ) verwendet wird und daß die aus der Tabelle (T) entnehmbaren Teilquotienten (TQ) jeweils $n + 1$ Bitstellen umfassen und die nacheinander ermittelten Teilquotienten (TQ) jeweils mit einer Bitstelle überlappend während der Division zu einem aktuellen Gesamtteilquotienten (GTQ) bzw. beim letzten Divisionsschritt zu einem Gesamtquotienten (GQ) verknüpft werden.

2. Verfahren nach Anspruch 1,
   **dadurch gekennzeichnet, daß** mit dem ersten Takt (TK1) eines kurz beabstandeten Doppeltaktes pro Divisionsschritt durch Weiterschalten des verkürzten Dividenden (DDK) die Ermittlung des Teilquotienten (TQ) unter Verwendung einer Tabelle (T) vor Vorliegen des mit dem zweiten Takt (TK2) des Doppeltaktes nachgeschalteten unverkürzten Dividenden (DD) begonnen wird.

3. Verfahren nach Anspruch 1 oder 2,
   **dadurch gekennzeichnet, daß** nach dem normalerweise letzten Divisionsschritt abhängig vom Auftreten eines Doppelwertes für den maßgeblichen letzten Teilquotienten (TQ) in der Tabelle (T) die Division solange fortgesetzt wird, bis ein Teilquotient (TQ) auftritt, der infolge der Überlappung entweder den maßgeblich letzten Teilquotienten (TQ) korrigiert oder derart von den Stellen der nachfolgenden Teilquotienten (TQ) abtrennt, daß sich eine von den nachfolgenden Teilquotienten (TQ) verursachte Korrektur vorheriger Teilquotienten (TQ) nicht mehr bis zum maßgeblichen letzten Teilquotienten (TQ) auswirkt.

4. Verfahren nach Anspruch 1 oder 2,
   **dadurch gekennzeichnet, daß** nach dem normalerweise letzten Divisionsschritt abhängig vom Auftreten eines Doppelwertes für den maßgeblichen letzten Teilquotienten (TQ) in der Tabelle (T) ein einziger weiterer Divisionsschritt mit einem Teilquotienten (TQ), der dem kleinstmöglichen, eine Korrektur bewirkenden Teilquotienten (TQ) entspricht, ausgeführt und abhängig vom Vorzeichen des unverkürz-

EP 0 256 455 B1

ten oder verkürzten Dividenden (DD, DDK) der letzte maßgebliche Teilquotient (TQ) und damit der Gesamtquotient (GQ) gegebenenfalls korrigiert wird.

5. Verfahren nach einem der Ansprüche 1 bis 4,
   **dadurch gekennzeichnet,** daß für die bei einem fehlerfreien Divisionsablauf unbenutzten Tabellenplätze der Tabelle (T) Einträge verwendet werden, die außerhalb des mit n + 1-Bitstellen für die Teilquotienten (TQ) darstellbaren Wertebereichs liegen und so eine Fehlererkennung zulassen.

6. Schaltungsanordnung zur schnellen Division langer Operanden in Datenverarbeitungseinrichtungen, bestehend aus einer Einrichtung zur Bitnormalisierung der Operanden und einer Einrichtung zur Vorausschauenden Ermittlung eines für den jeweils nächsten Divisionsschritt maßgebenden Teilquotienten anhand einer Tabelle mit Teilquotienten, die mit verkürzten Operanden angesteuert wird, **dadurch gekennzeichnet,** daß ein Divisions-Schaltungsteil (DST) zur Ermittlung eines aktuellen unverkürzten Dividenden in Form einer Summen- und einer Übertragskomponente (DD2, DD1) abhängig von einem jeweils aktuellen n + 1 Bitstellen umfassenden Teilquotienten (TQ) vorgesehen ist, der aus nebeneinander angeordneten gleichartigen Zellen (ZE) für je eine Operandenbitstelle aufgebaut ist, daß ein zum Divisions-Schaltungsteil (DST) parallel arbeitender Teilquotientenermittlungs-Schaltungsteil (TQES) vorgesehen ist, in dem während der Ermittlung der unverkürzten Dividenden in Komponentendarstellung (DD2, DD1) im Divisions-Schaltungsteil (DST), ausgehend von demselben aktuellen Teilquotienten (TQ) ein unter Berücksichtigung eines Konvergenzkriteriums auf i höchstwertige Bitstellen verkürzter Dividend (DDK) ermittelt wird, der zur Ermittlung des nächsten aktuellen Teilquotienten (TQ) herangezogen wird, und daß ein Teilquotientensummations-Schaltungsteil (TQSS) vorgesehen ist, in dem die jeweils aktuellen Teilquotienten (TQ) mit einer Bitstelle überlappend während der Division zu einem jeweils aktuellen Gesamtteilquotienten (GTQ) bzw. beim letzten Divisionsschritt zu einem Gesamtquotienten (GQ) zusammengefaßt werden.

7. Schaltungsanordnung nach Anspruch 6, **dadurch gekennzeichnet,** daß der Teilquotientenermittlungs-Schaltungsteil (TQES) mit dem ersten Taktimpuls und der mit gleichartigen Zellen (ZE) aufgebaute Divisions-Schaltungsteil (DST), sowie der Teilquotientensummations-Schaltungsteil (TQSS) mit dem zweiten Taktimpuls eines periodisch wiederkehrenden Doppeltaktes getaktet wird.

8. Schaltungsanordnung nach Anspruch 6 oder 7,
   **dadurch gekennzeichnet,** daß die Zelle (ZE) an gegenüberliegenden Seiten spiegelbildlich angeordnete Aus- und Eingänge zum Verbinden mit weiteren Zellen (ZE) sowie einen Dateneingang ($DE_i$) zum Schreiben in die Zelle (ZE) bzw. mehrere Datenausgänge ($DD1A1_{i+1}$, $DD1A2_{i+1}$, $AD5CA_{i+1}$, $AD5SA_i$, $DD2A1_i$, $DD2A2_i$) zum Lesen aus der Zelle aufweist.

9. Schaltungsanordnung nach Anspruch 8, **dadurch gekennzeichnet,** daß die jeweils sich gegenüberliegenden Ein- und Ausgänge nebeneinander angeordneter Zellen (ZE) mit spiegelbildlich herausgeführten Ein- und Ausgängen unmittelbar miteinander verbunden sind.

10. Schaltungsanordnung nach Anspruch 8 oder 9, **dadurch gekennzeichnet,** daß der Dateneingang ($DE_i$) der Zelle (ZE) auf der einen die beiden spiegelbildlich gegenüberliegenden in Richtung steigender und fallender Bitwertigkeit bei einer mehrzelligen Anordnung zeigenden Zeiten verbindenden Seite herausgeführt ist und die Datenausgänge ($DD1A2_{i+2}$, $AD5CA_{i+1}$, $AD5SA_i$, $DD2A2_i$) auf der dieser gegenüberliegenden Seite herausgeführt sind.

11. Schaltungsanordnung nach einem der Anspruch 6 bis 10, **dadurch gekennzeichnet,** daß die Zelle (ZE) ein Divisorregister ($DR_i$) sowie ein Übertragsregister ($DD1_{i+1}$) und ein Summenregister ($DD2_i$) für den in eine Übertrags- und Summenkomponente aufgespaltenen Dividenden (DD) für jeweils eine Bitstelle des Divisors (DR) bzw. des Dividenden (DD), zwei 1-aus-n Auswahlschaltglieder ($MUX4_i$, $MUX5_i$) mit an den Eingängen anliegenden zum Teil negierten und nicht negierten bei einer mehrzelligen Anordnung von versetzten Bitstellen des Divisors (DR) und Dividenden (DD) abgeleiteten Binärwerten zur Bildung des Divisorvielfachen in Komplementdarstellung bzw. zum Laden der Dividendenregister ($DD1_{i+1}$, $DD2_i$) und einen ersten Addierer ($AD4_i$) und einen zweiten Addierer ($AD5_i$) mit je drei Eingängen und je einem Übertrags- und Summenausgang zur Durchführung der durch die Einerkomplementierung des von den Auswahlschaltern ($MUX4_i$, $MUX5_i$) gelieferten Divisorvielfachen in eine Addition umgewandelten Subtraktion des Divisorvielfachen vom Dividenden bzw. Dividendenrest auf-

15

weist.

**12.** Schaltungsanordnung nach Anspruch 11, **dadurch gekennzeichnet,** daß der erste Eingang des ersten Addierers ($AD4_i$) der Zelle (ZE) mit dem Ausgang (VDR1) des ersten Auswahlschalters ($MUX4_i$), der zweite Eingang mit dem Ausgang (VDR2) des zweiten Auswahlschalters ($MUX5_i$) und der dritte Eingang mit dem dem Zellenausgang ($DD2A_{i-1}$) spiegelbildlich gegenüberliegenden Zelleneingang ($DD2E_{i-2}$) zur Übernahme des im Dividendenregister ($DD2_i$) einer benachbarten Zelle (ZE) bei einer mehrzelligen Anordnung stehenden Binärwertes, der Übertragsausgang ($AD4C_i$) zum weiterleiten eines in der Zelle (ZE) ermittelten Übertragswertes an eine benachbarte Zelle (ZE) bei einer mehrzelligen Anordnung mit dem Zellenausgang ($AD4CA_i$) und der Summenausgang ($AD4S_i$) mit dem ersten Eingang des zweiten Addierers ($AD5_i$), der zweite Eingang des zweiten Addierers ($AD5_i$) mit dem dem Zellenausgang ($AD4CA_i$) spiegelbildlich gegenüberliegenden Zelleneingang ($AD4CE_{i-1}$) zur Übernahme des in der benachbarten Zelle (ZE) bei einer mehrzelligen Anordnung vom ersten Addierer ($AD4_i$) ermittelten Übertrages, der dritte Eingang mit dem dem Zellenausgang ($DD1A_{i-1}$) spiegelbildlich gegenüberliegenden Zelleneingang ($DD1E_{i-2}$) zur Übernahme des im Dividendenregister ($DD1_{i+1}$) einer benachbarten Zelle (ZE) bei einer mehrzelligen Anordnung stehenden Binärwertes, der Übertragsausgang ($AD5C_i$) sowohl mit dem Dividendenregister ($DD1_{i+1}$) als auch mit dem Zellenausgang ($AD5CA_{i+1}$) zur Weitergabe des in dieser Zelle (ZE) ermittelten Übertragsergebnisses und der Summenausgang ($AD5S_i$) sowohl mit dem Dividendenregister ($DD2_i$) als auch mit dem Zellenausgang ($AD5SA_i$) zur Weitergabe des in dieser Zelle (ZE) ermittelten Summenergebnisses an zusätzliche Verarbeitungskomponenten verbunden ist, daß die Ausgänge der Dividendenregister ($DD1_{i+1}$, $DD2_i$) jeweils mit einem Zellenausgang ($DD1A1_{i+1}$, $DD2A1_i$) in Richtung steigender Bitwertigkeit bei einer mehrzelligen Anordnung mit spiegelbildlich gegenüberliegenden Zelleneingängen ($DD1E_i$, $DD2E_{i-1}$) und je mit einem Zellenausgang ($DD1A2_{i+1}$, $DD2A2_i$) zum Übergeben der in den Dividendenregistern gespeicherten Binärwerten an weitere Verarbeitungskomponenten verbunden sind, daß das Divisorregister ($DR_i$) einen negierten und nicht negierten Ausgang aufweist, die sowohl mit Eingängen des ersten 1-aus-n Auswahlschalters ($MUX4_i$) als auch mit zu einem ersten Teil einer Gruppe von bei einer mehrzelligen Anordnung seitens in Richtung steigender Bitwertigkeiten herausgeführten Ausgängen ($DRNA_i$, $DRA_i$, $DRA_{i-1}$, $DRNA_{i-2}$) gehörenden Ausgängen ($DRNA_i$, $DRA_i$) verbunden sind, der an der Zelle (ZE) gegenüberliegenden Seite eine spiegelbildliche Gruppe von Eingängen ($DRNE_{i-1}$, $DRE_{i-1}$, $DRNE_{i-2}$, $DRNE_{i-3}$) zugeordnet ist, deren Eingänge zum Teil durch stufenversetzte Leitungen jeweils mit einem zum zweiten Teil der spiegelbildlich angeordneten Ausgangsgruppe gehörenden Ausgang ($DRA_{i-1}$, $DRNA_{i-2}$) und zum Teil jeweils mit Eingängen des ersten und zweiten 1-aus-n Auswahlschalters ($MUX4_i$, $MUX5_i$) verbunden sind, so daß bei einer mehrzelligen Anordnung der im Divisionsregister ($DR_i$) stehende Binärwert in Richtung aufsteigender Bitwertigkeiten über die jeweils parallel gegenüberliegenden Aus- und Eingänge benachbarter Zellen (ZE) in negierter und nicht negierter Form an den Eingängen des ersten und zweiten 1-aus-n Auswahlschalters der betroffenen benachbarten Zellen (ZE) anliegt und daß jeweils an einem Eingang des ersten und zweiten 1-aus-n Auswahlschalters ($MUX4_i$, $MUX5_i$) der Binärwert Null fest anliegt.

**13.** Schaltungsanordnung nach Anspruch 11 oder 12, **dadurch gekennzeichnet,** daß die beiden mit den Ausgängen der Dividendenregister ($DD1_{i+1}$, $DD2_i$) verbundenen Ausgänge ($DD1A1_{i+1}$, $DD2A1_i$) der Zelle (ZE) zu einem ersten Teil einer Gruppe von bei einer mehrzelligen Anordnung seitens in Richtung steigender Bitwertigkeiten herausgeführten Ausgängen ($DD2A_{i-1}$, $DD1A_{i-1}$, $DD1A_i$, $DD1A1_{i+1}$, $DD2A1_i$) gehören, der an der der Zelle (ZE) gegenüberliegenden Seite eine spiegelbildliche Gruppe von Eingängen ($DD2E_{i-2}$, $DD1E_{i-2}$, $DD1E_{i-1}$, $DD1E_i$, $DD2E_{i-1}$) zugeordnet ist, deren Eingänge bis auf zwei durch Stufen versetzte Leitungen jeweils mit einem zum zweiten Teil der spiegelbildlich angeordneten Ausgangsgruppe gehörenden den Ausgang ($DD2A_{i-1}$, $DD1A_{i-1}$, $DD1A_i$) verbunden sind, so daß bei einer mehrzelligen Anordnung der im Summenkomponenten bildenden Dividendenregister ($DD2_i$) stehende Binärwert in Richtung aufsteigender Bitwertigkeiten über die jeweiligen Aus- und Eingänge benachbarter Zellen (ZE) am dritten Eingang des ersten Addierers und der im Übertragskomponenten bildenden Dividendenregister ($DD1_{i+1}$) stehende Binärwert über die jeweils parallel gegenüberliegenden Aus- und Eingänge benachbarter Zellen (ZE) am dritten Eingang des zweiten Addierers der betroffenen benachbarten Zellen (ZE) anliegt.

**14.** Schaltungsanordnung nach Anspruch 13, **dadurch gekennzeichnet,**

daß die spiegelbildlich zugeordneten Gruppen von Aus- und Eingängen der Zelle (ZE), über die bei einer mehrzelligen Anordnung die in den Dividendenregistern ($DD1_{i+1}$, $DD2_i$) stehenden Binärwerte zu den dritten Eingängen der ersten und zweiten Addierer der betroffenen benachbarten Zellen (ZE) geschleust werden, jeweils fünf Aus- und Eingänge aufweisen, und daß die spiegelbildlich zugeordneten Gruppen von Aus- und Eingängen der Zelle (ZE), über die bei einer mehrzelligen Anordnung der im Divisorregister ($DR_i$) stehende Binärwert negiert und nicht negiert bis zum Anliegen an die Eingänge des ersten und zweiten 1-aus-n Auswahlschalters der betroffenen benachbarten Zellen (ZE) geschleust werden, jeweils vier Aus- und Eingänge aufweisen.

15. Schaltungsanordnung nach Anspruch. 11 oder 13, **dadurch gekennzeichnet,** daß der Dateneingang ($DE_i$) der Zelle (ZE) sowohl mit dem Eingang des Divisorregisters ($DR_i$) als auch mit einem für sich zu einem ersten Teil einer Gruppe von bei einer mehrzelligen Anordnung seitens in Richtung fallender Bitwertigkeiten herausgeführten Ausgängen ($DA_i$, $DA_{i+1}$, $DA_{i+2}$, $DA_{i+3}$, $DA_{i+4}$) gehörenden Ausgang ($DA_i$) verbunden ist, der an der der Zelle (ZE) gegenüberliegenden Seite eine spiegelbildliche Gruppe von Eingängen ($DE_{i+1}$, $DE_{i+2}$, $DE_{i+3}$, $DE_{i+4}$, $DE_{i+5}$) zugeordnet ist, deren Eingänge bis auf eine durch stufenversetzte Leitungen jeweils mit einem zum zweiten Teil der spiegelbildlich angeordneten Ausgangsgruppe gehörenden Ausgang ($DA_{i+1}$, $DA_{i+2}$, $DA_{i+3}$, $DA_{i+4}$) verbunden sind, so daß bei einer mehrzelligen Anordnung der am Zelleneingang ($DE_i$) anstehende Binärwert in Richtung fallender Bitwertigkeiten über die jeweils parallel gegenüberliegenden Aus- und Eingänge benachbarten Zellen (ZE) an einem der Eingänge des zweiten Auswahlschalters der betroffenen benachbarten Zellen (ZE) anliegt.

16. Schaltungsanordnung nach Anspruch 15, **dadurch gekennzeichnet,** daß die spiegelbildlich zugeordneten Gruppen von Aus- und Eingängen der Zelle (ZE), über die der am Dateneingang ($DE_i$) einer Zelle (ZE) anliegende Binärwert bis zum Eingang des 1-aus-n Auswahlschalters einer nachfolgenden benachbarten Zelle (ZE) geschleust wird, jeweils fünf Aus- und Eingänge aufweisen.

17. Schaltungsanordnung nach Anspruch 11, 13 oder 15, **dadurch gekennzeichnet,** daß der erste und zweite 1-aus-n Auswahlschalter ($MUX4_i$, $MUX5_i$) mit Steuerleitungen (QC1, QC2, QC3, QC4) verbunden sind, die ihrerseits mit bei einer mehrzelligen Anordnung beidseitig in Richtung steigender und fallender Bitwertigkeiten vorgesehenen und zueinander in spiegelbildlich angeordneten Gruppe von Ein- und Ausgängen ohne örtliche Festlegung der Ein- bzw. Ausgänge verbunden sind und daß das Divisorregister ($DR_i$) und die Dividendenregister ($DD1_{i+1}$, $DD2_i$) jeweils mit einer eigenen Steuerleitung (WDR, WDD) zum Schreiben in die Register als auch mit einer gemeinsamen Steuerleitung (RES) zum Löschen der Register verbunden sind, die ihrerseits jeweils mit zur Bildung einer mehrzelligen Anordnung beidseitig in Richtung steigender und fallender Bitwertigkeiten vorgesehenen und zueinander spiegelbildlich angeordneten Ein- und Ausgängen ohne örtliche Festlegung der Ein- bzw. Ausgänge verbunden sind.

18. Schaltungsanordnung nach Anspruch 17, **dadurch gekennzeichnet,** daß der erste und zweite 1-aus-n Auswahlschalter jeweils zwei Steuerleitungen aufweist.

19. Schaltungsanordnung nach Anspruch 11, 17 oder 18, **dadurch gekennzeichnet,** daß die beiden 1-aus-n Auswahlschaltglieder ($MUX4_i$, $MUX5_i$) der Zelle (ZE) jeweils vier Eingänge zur Bildung des Nullbis Siebenfachen des Divisors (DR) aufweisen.

20. Schaltungsanordnung nach Anspruch 6 oder 7, **dadurch gekennzeichnet,** daß der Teilquotientenermittlungs-Schaltungsteil (TQES) ein mit dem höherwertigen Bitteil des Einganges (DE) der gesamten Divisionseinrichtung (DIV) verbundenes Divisorregister ($DR^j$), einen mit dem Divisorregister ($DR^j$) verbundenen Divisorbitnormalisierer (DRBN) mit Vielfachbildung des verkürzten Divisors ($DR^k$), einen aus den vom Divisorbitnormalisierer (DRBN) bereitgestellten Vielfachen auswählenden mehrstelligen 1-aus-n Auswahlschalter (MUX1), einen aus Vielfachen der Übertragskomponente ($DD1^j$) des in eine Übertrags- und Summenkomponente (DD1, DD2) aufgeteilten Dividenden (DD) auswählenden 1-aus-n Auswahlschalter (MUX2, MUX3), einen mit den beiden 1-aus-n Auswahlschaltern (MUX2, MUX3) verbundenen ersten Addierer (AD1) und eine mit dem 1-aus-n Auswahlschalter (MUX1) und dem Addierer (AD1) verbundenen zweiten Addierer (AD2), ein verkürztes Dividendenregister (DDK) und einen mit dem Divisorbitnormalisierer (DRBN), mit dem Divisions-Schaltungsteil (DST), mit dem verkürzten Dividendenregister (DDK) und mit dem Teilquotientensummations-Schaltungsteil (TQSS) verbundenen Teilquotientengenerator (TQG) aufweist.

daß der 1-aus-n Auswahlschalter (MUX1) durch den Teilquotienten (TQ) und die beiden 1-aus-n Auswahlschalter (MUX2, MUX3) durch die bei der Bitnormalisierung des verkürzten Divisors (DR$^j$) entstehenden Verschiebeamplitude gesteuert wird und

daß der Divisorbitnormalisierer (DRBN) den unteren Teil und das verkürzte Dividendenregister (DDK) den oberen Teil einer Steuersignalgruppe für den Teilquotientengenerator (TQG) liefert.

21. Schaltungsanordnung nach Anspruch 20, **dadurch gekennzeichnet, daß** der 1-aus-n Auswahlschalter (MUX1) acht Eingänge zur Auswahl des Null- bis Siebenfachen des bitnormalisierten verkürzten Divisors (DR$^k$) aufweist.

22. Schaltungsanordnung nach Anspruch 20, **dadurch gekennzeichnet, daß** der verkürzte Dividend (DDK) und der verkürzte Divisor (DRK) jeweils fünf Bitstellen aufweist.

23. Schaltungsanordnung nach Anspruch 20, **dadurch gekennzeichnet, daß** der Teilquotientengenerator (TQG) eine ROM-Tabelle ist.

24. Schaltungsanordnung nach Anspruch 20 oder 23, **dadurch gekennzeichnet, daß** der von dem Teilquotientengenerator (TQG) erzeugte Teilquotient (TQ) jeweils drei Bitstellen aufweist.

25. Schaltungsanordnung nach Anspruch 6 oder 7, **dadurch gekennzeichnet, daß** der Teilquotientensummations-Schaltungsteil (TQSS) ein Quotientenregister (QUO) und einen eingangsseitig mit dem Quotientenregister (QUO) und dem Teilquotientengenerator (TQG) verbundenen Addierer (AD3) aufweist und daß der Ausgang des Addierers (AD3) mit einer vorgegebenen Anzahl von niederwertigsten Bitstellen des Quotientenregisters (QUO) versetzt verbunden ist.

26. Schaltungsanordnung nach Anspruch 25, **dadurch gekennzeichnet, daß** der Ausgang des Addierers (AD3) um zwei Bitstellen versetzt mit dem Eingang des Quotientenregister (QUO) verbunden ist.

27. Schaltungsanordnung nach Anspruch 6 oder 7,
**dadurch gekennzeichnet, daß** der Teilquotientensummations-Schaltungsteil (TQSS) ein von der höchstwertigen Bitstelle des vom Teilquotientengenerators (TQG) gelieferten Teilquotienten (TQ) abhängiges inkrementierendes und anschließend um eine vorgegebene Anzahl von Bitstellen verschiebendes Schieberegister ist.

## Claims

1. Method for fast division of long operands in data processing equipment on the basis of operands normalised at the start of the division and of a table (T), driven by the abbreviated operands, with the top quotients (TQ) that are decisive for the particular division step, subtraction of the divisor multiple, which is formed with the decisive subquotient (TQ), being used per division step, starting from the non-abbreviated dividend (DD) last determined in each case, to determine a new non-abbreviated dividend (DD) and simultaneously, in a corresponding fashion, an abbreviated dividend (DDK), characterised in that during the division operation the non-abbreviated dividend is held in component representation with sum and carry components (DD2, DD1), and the dividend components then representing the remainder of the division are combined, as the case may be, to form a total dividend only at the end of the division operation, in that starting from the dividend components (DD1$^k$, DD2$^k$), abbreviated in the same sense in each case, and the divisor (DR$^k$), abbreviated in the same sense, the abbreviated dividend (DDK), which forms one part of the drive addresses for the table (T) with the subquotients (TQ), firstly abbreviated as a function of circuit to k bit positions, is determined in total representation and subsequently abbreviated once again to i bit positions, in that the divisor (DRK) forming the other part of the drive addresses for the table (T) with the subquotients (TQ) is abbreviated in the same sense to form the dividend (DDK), abbreviated to i bit positions, in that the i-abbreviation of the operands is chosen such that the uncertainty hereby occasioned in the forecast of a subquotient (TQ), which arises in accordance with the relationship $DD_{min}/DR_{max} < TQ < DD_{max}/DR_{min}$ with the maximum and minimum dividends and divisor $DD_{max}$, $DD_{min}$, $DR_{max}$ and $DR_{min}$ of the dividend and divisor DDK and DRK abbreviated to i bit positions, causes, taking account as the case may be of a correction value (CORR),

an interval ($TQ_{diff}$ = $TQ_{max}$ - $TQ_{min}$) of possible subquotients (TQ) of such a magnitude that, taking account of a magnitude of error $\Delta$ with zero $\leq \Delta < 1$, which is occasioned by limitation of the minimum subquotient ($TQ_{min}$) to a multiplication factor m, comprising n + 1 bit positions, in accordance with the relationship m = $TQ_{min}$ - $\Delta$,

$$TQ_{diff} + \Delta < 2$$

in that of the double values for m, which arise on the basis of the convergence criterion at some positions of the table (T) with the subquotients (TQ) and fluctuate at most by the value 1, the respectively smaller value ($m_{min}$) is used as subquotients (TQ), and in that the subquotients (TQ) capable of being extracted from the table (T) comprise n + 1 bit positions in each case and the sequentially determined subquotients (TQ) are combined during the division, with one bit position overlapping in each case, to form an actual total subquotient (GTQ) or, in the case of the last division step, to form a total quotient (GQ).

2. Method according to Claim 1, characterised in that the determination of the subquotient (TQ) is started with the first clock pulse (TK1) of a closely spaced double clock pulse per division step by progressing the abbreviated dividend (DDK), making use of a table (T) before the non-abbreviated dividend (DD) connected downstream with the second clock pulse (TK2) of the double clock pulse is available.

3. Method according to Claim 1 or 2, characterized in that after the division step that is normally last the division is continued, depending upon the occurrence of a double value for the decisive last subquotient (TQ) in the table (T) until a subquotient (TQ) occurs which as a consequence of the overlapping either corrects the decisive last subquotient (TQ) or separates it from the positions of the following subquotients (TQ) in such a way that a correction, caused by the following subquotients (TQ), of previous subquotients (TQ) is no longer effective up to the decisive last subquotient (TQ).

4. Method according to Claim 1 or 2, characterised in that after the division step that is normally last, depending upon the occurrence of a double value for the decisive last subquotient (TQ) in the table (T) a single further division step having a subquotient (TQ), which corresponds to the smallest possible subquotient (TQ) that effects a correction, is carried out, and depending upon the sign of the non-abbreviated or abbreviated dividend (DD, DDK) the last decisive subquotient (TQ) and thus the total quotient (TQ) is corrected, as the case may be.

5. Method according to one of Claims 1 to 4, characterised in that for the tabular places of the table (T) that are unused in the case of an error-free division operation, entries are used which lie outside the range of values that can be represented with n + 1 bit positions for the subquotients (TQ) and thus permit error detection.

6. Circuit arrangement for fast division of long operands in data processing equipment, consisting of a device for bit normalisation of the operands and a device for predictive determination of a subquotient that is decisive for the respective next division step on the basis of a table with subquotients, which is driven by means of abbreviated operands, characterised in that a division circuit component (DST), which is constructed from similar cells (ZE), arranged next to one another, for one operand bit position each, is provided for determining an actual non-abbreviated dividend in the form of a sum component and a carry component (DD2, DD1) depending upon a subquotient (TQ) comprising actual n + 1 bit positions in each case, in that a subquotient determining circuit component (TQES) operating in parallel with the division circuit component (DST) is provided in which, during the determination of the non-abbreviated dividends in component representation (DD2, DD1) in the division circuit component (DST), starting from the same actual subquotient (TQ) a dividend (DDK), which is abbreviated to i most significant bit positions taking account of a convergence criterion, is determined which divided is used to determine the next actual subquotient (TQ), and in that a subquotient summing circuit component (TQSS) is provided in which the particular actual subquotients (TQ) are combined, overlapping with one bit position, to form a particular actual total subquotient (GTQ) during the division, or to form a total quotient (GQ) in the case of the last division step.

7. Circuit arrangement according to Claim 6, characterised in that the subquotient determining circuit component (TQES) is clocked with the first clock pulse of a periodically recovering double clock pulse, and the division circuit component (DST), which is constructed with similar cells (ZE), as well as the subquotient summing circuit component (TQSS) is clocked with the second clock pulse.

8. Circuit arrangement according to Claim 6 or 7, characterised in that the cell (ZE) has outputs and inputs, arranged in mirrored fashion on opposite sides, for connecting to further cells (ZE) as well as a data input ($DE_i$) for writing into the cell (ZE) or a plurality of data outputs ($DD1A1_{i+1}$, $DD1A2_{i+1}$, $AD5CA_{i+1}$, $AD5SA_i$, $DD2A1_i$, $DD2A2_i$) for reading from the cell.

9. Circuit arrangement according to Claim 8, characterised in that the particular opposite inputs and outputs of mutually adjacent cells (ZE) having inputs and outputs brought out in mirrored fashion are directly connected to one another.

10. Circuit arrangement according to Claim 8 or 9, characterised in that the data input ($DE_i$) of the cell (ZE) is brought out on one side on which in the case of a multi-cell arrangement connects the two sides lying opposite in mirrored fashion and pointing in the direction of rising and falling bit significance, and the data outputs ($DD1A2_{i+2}$, $AD5CA_{i+1}$, $AD5SA_i$, $DD2A2_i$) are brought out on the side opposite to said side.

11. Circuit arrangement according to one of Claims 6 to 10, characterised in that the cell (ZE) has a divisor register ($DR_i$) as well as a carry register ($DD1_{i+1}$) and a sum register ($DD2_i$) for the dividend (DD), split into a carry component and sum component, for in each case one bit position of the divisor (DR) or of the dividend (DD), two 1-from-n selection gates ($MUX4_i$, $MUX5_i$) with binary values, which are present at the inputs, are partially negated and non-negated and are derived in the case of a multi-cell arrangement from offset bit positions of the divisor (DR) and dividend (DD), for forming the divisor multiple in complementary representation or for loading the dividend register ($DD1_{i+1}$, $DD2_i$), and a first adder ($AD4_i$) and a second adder ($AD5_i$) each having three inputs and each having a carry output and sum output for carrying out the subtraction, converted into an addition by means of the one's complementing of the divisor multiple delivered by the selection switches ($MUX4_i$, $MUX5_i$), of the divisor multiple from the dividend or dividend remainder.

12. Circuit arrangement according to Claim 11, characterised in that the first input of the first adder ($AD4_i$) of the cell (ZE) is connected to the output (VDR1) of the first selection switch ($MUX4_i$), the second input is connected to the output (VDR2) of the second selection switch ($MUX5_i$) and the third input is connected to the cell input ($DD2E_{i-2}$), lying opposite the cell output ($DD2A_{i-1}$) in a mirrored fashion, for accepting the binary value present in the dividend register ($DD2_i$) of an adjacent cell (ZE) in the case of a multi-cell arrangement, the carry output ($AD4C_i$) for relaying a carry value determined in the cell (ZE) to an adjacent cell (ZE) in the case of a multi-cell arrangement is connected to the cell output ($AD4CA_i$) and the sum output ($AD4S_i$) is connected to the first input of the second adder ($AD5_i$), the second input of the second adder ($AD5_i$) is connected to the cell input ($AD4CE_{i-1}$), lying opposite the cell output ($AD4CA_i$) in mirrored fashion, for accepting the carry determined in the adjacent cell (ZE) in the case of a multi-cell arrangement by the first adder ($AD4_i$), the third input is connected to the cell input ($DD1E_{i-2}$), lying opposite the cell output ($DD1A_{i-1}$) in mirrored fashion, for accepting the binary value present in the dividend register ($DD1_{i+1}$) of an adjacent cell (ZE) in the case of a multi-cell arrangement, the carry output ($AD5C_i$) is connected both to the dividend register ($DD1_{i+1}$) and to the cell output ($AD5CA_{i+1}$) for relaying the carry result determined in said cell (ZE), and the sum output ($AD5S_i$) is connected both to the dividend register ($DD2_i$) and to the cell output ($AD5SA_i$) for relaying the sum result determined in said cell (ZE) to additional processing components, in that the outputs of the dividend registers ($DD1_{i+1}$, $DD2_i$) are connected in each case to a cell output ($DD1A1_{i+1}$, $DD2A1_i$) in the direction of rising bit significance in the case of a multi-cell arrangement having cell inputs ($DD1E_i$, $DD2E_{i-1}$) lying opposite in mirrored fashion and are each connected to a cell output ($DD1A2_{i+1}$, $DD2A2_i$) for transferring the binary values stored in the dividend registers to further processing components, in that the divisor register ($DR_i$) has a negated and non-negated output, which are connected both to inputs of the first 1-from-n selection switch ($MUX4_i$) and to outputs ($DRNA_i$ $DRA_i$) belonging to a first part of a group of outputs ($DRNA_i$, $DRA_i$, $DRA_{i-1}$, $DRNA_{i-2}$) brought out in the case of a multi-cell arrangement on the side of bit significances rising in direction, to which group a mirrored group of inputs ($DRNE_{i-1}$, $DRE_{i-2}$, $DRNE_{i-2}$, $DRNE_{i-3}$) is assigned on the side opposite the cell (ZE), the inputs of which are connected, partly by lines offset stepwise, respectively to an output ($DRA_{i-1}$, $DRNA_{i-2}$) belonging to the second part of the output group arranged in mirrored fashion, and partly respectively to inputs of the first and second 1-from-n selection switch (MUX4$_i$, MUX5$_i$), so that in the case of a multi-cell arrangement the binary value present in the division register (DR$_i$) is present in the direction of rising bit significances via the outputs and inputs, lying opposite in parallel in each case, of adjacent cells (ZE) in negated and non-negated form at the inputs of the first and second 1-from-n selection switch of the adjacent cells (ZE) concerned, and in that the binary value zero is permanently present in each case at an input of the first and second 1-from-n selection switch (MUX4$_i$, MUX5$_i$).

13. Circuit arrangement according to Claim 11 or 12, characterised in that the two outputs (DD1A$_{i+1}$, DD2A1$_i$) of the cell (ZE) connected to the outputs of the dividend registers (DD1$_{i+1}$, DD2$_i$) belong to a first part of a group of outputs (DD2A$_{i-1}$, DD1A$_{i-1}$ DD1A$_{i-1}$, DD1A1$_{i+1}$ DD2A1$_i$) brought out in the case of a multi-cell arrangement on the side of bit significances rising in direction, to which group a mirrored group of inputs (DD2E$_{i-2}$, DD1E$_{i-2}$ DD1E$_{i-1}$, DD1E$_i$, DD2E$_{i-1}$) is assigned on the side opposite the cell (ZE), all but two inputs of which are connected, by lines offset stepwise, respectively to an output (DD2A$_{i-1}$, DD1A$_{i-1}$, DD1A$_i$) belonging to the second part of the output group arranged in mirrored fashion, so that in the case of a multi-cell arrangement the binary value present in the dividend register (DD2$_i$) forming sum components is present in the direction of rising bit significances via the particular outputs and inputs of adjacent cells (ZE) at the third input of the first adder and the binary value present in the dividend register (DD1$_{i+1}$) forming carry components is present via the outputs and inputs, lying opposite in parallel in each case, of adjacent cells (ZE) at the third input of the second adder of the adjacent cells (ZE) concerned.

14. Circuit arrangement according to Claim 13, characterised in that the groups, assigned in mirrored fashion, of outputs and inputs of the cell (ZE), via which in the case of a multi-cell arrangement the binary values present in the dividend registers (DD1$_{i+2}$, DD2$_i$) are routed to the third inputs of the first and second adders of the adjacent cells (ZE) concerned have five outputs and inputs in each case, and in that the groups, arranged in mirrored fashion, of outputs and inputs of the cell (ZE), via which in the case of a multi-cell arrangement the binary value present in the divisor register (DR$_i$), negated and non-negated until present at the inputs of the first and second 1-from-n selection switch of the adjacent cells (ZE) concerned is routed, have four outputs and inputs in each case.

15. Circuit arrangement according to Claim 11 or 13, characterised in that the data input (DE$_i$) of the cell (ZE) is connected both to the input of a divisor register (DR$_i$) and to an output (DA$_i$) belonging per se to a first part of a group of outputs (DA$_i$, DA$_{i+1}$, DA$_{i+2}$, DA$_{i+3}$, DA$_{i+4}$) brought out in the case of a multi-cell arrangement on the side of bit significances falling in direction, to which group a mirrored group of inputs (DE$_{i+1}$, DE$_{i+2}$, DE$_{i+3}$, DE$_{i+4}$, DE$_{i+5}$) is assigned on the side lying opposite the cell (ZE), all but one inputs of which are connected, by lines offset stepwise, respectively to an output (DA$_{i+1}$, DA$_{i+2}$, DA$_{i+3}$, DA$_{i+4}$) belonging to the second part of the output group arranged in mirrored fashion, so that in the case of a multi-cell arrangement the binary value present at the cell input (DE$_i$) is present in the direction of falling bit significances via the outputs and inputs, lying opposite in parallel in each case, of adjacent cells (ZE) at one of the inputs of the second selection switch of the adjacent cells (ZE) concerned.

16. Circuit arrangement according to Claim 15, characterised in that the groups, assigned in mirrored fashion, of outputs and inputs of the cell (ZE), via which the binary value present at the data input (DE$_i$) of a cell (ZE) is routed up to the input of the 1-from-n selection switch of a subsequent adjacent cell (ZE), have five outputs and inputs in each case.

17. Circuit arrangement according to Claim 11, 13 or 15, characterised in that the first and second 1-from-n selection switches (MUX4$_i$, MUX5$_i$) are connected to control lines (QC1, QC2, QC3, QC4), which for their part in the case of a multi-cell arrangement are connected to a group of inputs and outputs provided on both sides in the direction of rising and falling bit significances and arranged in mirrored fashion with respect to one another and without fixing the location of the inputs or outputs, and in that the divisor register (DR$_i$) and the dividend registers (DD1$_{i+1}$, DD2$_i$) are connected in each case to their own control line (WDR, WDD) for writing into the registers, as well as to a common control line (RES) for clearing the registers, which are connected for their part in each case to inputs and outputs, provided on both sides in the direction of rising and falling bit significances for the purpose of forming a multi-cell arrangement and arranged in mirrored fashion with respect to one another, without fixing the location of the inputs or outputs.

21

**18.** Circuit arrangement according to Claim 17, characterised in that the first and second 1-from-n selection switch each have two control lines.

**19.** Circuit arrangement according to Claim 11, 17 or 18, characterised in that the two 1-from-n selection gates ($MUX4_i$, $MUX5_i$) of the cell (ZE) in each case have four inputs for the purpose of forming the zero-fold to seven-fold multiple of the divisor (DR).

**20.** Circuit arrangement according to Claim 6 or 7, characterised in that the subquotient determining circuit component (TQES) has a divisor register ($DR^j$) connected to the more significant bit part of the input (DE) of the entire divider (DIV), a divisor bit normalisor (DRBN), connected to the divisor register ($DR^j$) and forming multiples of the abbreviated divisor ($DR^k$), a multi-position 1-from-n selection switch (MUX1), which selects from the multiples provided by the divisor bit normalisor (DRBN), a 1-from-n selector switch (MUX2, MUX3), selecting from multiples of the carry component ($DD1^j$) and a 1-from-n selection switch (MUX2, MUX3), selecting from multiples of the sum component ($DD2^j$) of the dividend (DD) sub-divided into a carry component and sum component (DD1, DD2), a first adder (AD1) connected to the two 1-from-n selection switches (MUX2, MUX3) and a second adder (AD2) connected to the 1-from-n selection switch (MUX1) and the adder (AD1), an abbreviated dividend register (DDK), and a subquotient generator (TQG) connected to the divisor bit normalisor (DRBN), to the division circuit component (DST), to the abbreviated dividend register (DDK) and to the subquotient summing circuit component (TQSS), in that the 1-from-n selection switch (MUX1) is controlled by the subquotient (TQ) and the two 1-from-n selection switches (MUX2, MUX3) are controlled by the shift amplitude arising with the bit normalisation of the abbreviated divisor ($DR^j$), and in that the divisor bit normalisor (DRBN) delivers the lower part and the abbreviated dividend register (DDK) the upper part of a control signal group for the subquotient generator (TQG).

**21.** Circuit arrangement according to Claim 20, characterised in that the 1-from-n selection switch (MUX1) has eight inputs for selecting the zero-fold to seven-fold multiple of the bit-normalised, abbreviated divisor ($DR^k$).

**22.** Circuit arrangement according to Claim 20, characterised in that the abbreviated dividend (DDK) and the abbreviated divisor (DRK) each have five bit positions.

**23.** Circuit arrangement according to Claim 20, characterised in that the subquotient generator (TQG) is an ROM table.

**24.** Circuit arrangement according to Claim 20 or 23, characterised in that the subquotient (TQ) generated by the subquotient generator (TQG) has three bit positions in each case.

**25.** Circuit arrangement according to Claim 6 or 7, characterised in that the subquotient summing circuit component (TQSS) has a quotient register (QUO) and an adder (AD3) connected on the input side to the quotient register (QUO) and the subquotient generator (TQG), and in that the output of the adder (AD3) is connected in an offset fashion to a prescribed number of least significant bit positions of the quotient register (QUO).

**26.** Circuit arrangement according to Claim 25, characterised in that the output of the adder (AD3) is connected offset by two bit positions to the input of the quotient register (QUO).

**27.** Circuit arrangement according to Claim 6 or 7, characterised in that the subquotient summing circuit component (TQSS) is an incrementing shift register dependent upon the most significant bit position of the subquotient (TQ) delivered by the subquotient generator (TQG), which subsequently shifts by the number of n bit positions in accordance with the number of the bit positions which develop the total subquotient (GTQ) per division step.

**Revendications**

**1.** Procédé pour réaliser la division rapide de longs opérandes dans des installations de traitement de données, sur la base d'opérandes normalisés au début de la division et d'un tableau (T) commandé par les opérandes courts et contenant les quotients partiels (TQ) qui sont déterminants pour les pas respectifs de division, et selon lequel pour chaque pas de division un nouveau dividende (DD) non raccourci est formé à partir du dividende (DD) non raccourci, déterminé respectivement en dernier lieu, par soustraction du multiple du diviseur, qui est formé avec le quotient partiel déterminant (TQ), et un dividende raccourci (DDK) est déterminé simultanément de façon correspondante,

caractérisé par le fait que le dividende non raccourci est conservé, pendant le déroulement de la division, selon une représentation en composantes incluant des composantes de sommes et de report (DD2, DD1), et que seulement à la fin du déroulement de la division, les composantes du dividende, qui représentent le reste de la division, sont réunies éventuellement pour former un dividende complet, que le dividende raccourci (DDK), qui forme une partie des adresses de commande pour le tableau (T) contenant les quotients partiels (TQ) est déterminé, en fonction du circuit, tout d'abord en étant raccourci à k positions binaires dans une représentation globale, à partir des composantes ($DD1^k$, $DD2^k$) respectivement raccourcies dans le même sens et à partir du diviseur ($DR^k$) raccourci dans le même sens, et est ensuite encore raccourci à i positions binaires, que le diviseur (DRK), qui forme l'autre partie des adresses de commande pour le tableau (T) contenant les quotients partiels (TQ) est raccourci dans le même sens que le dividende (DDK) raccourci à i positions binaires, que le raccourcissement des opérandes à i positions est choisi de manière que l'incertitude, qui est conditionnée de ce fait lors de la prédiction d'un quotient partiel (TQ) et est obtenue conformément à la relation $DD_{min}/DR_{max} < TQ < DD_{max}/DR_{min}$, qui fait intervenir les dividendes maximum et minimum et les diviseurs maximum et minimum $DD_{max}$, $DD_{min}$, $DR_{max}$ et $DR_{min}$ du dividende (DDK) et du diviseur (DRK), raccourcis à i positions binaires, fait apparaître, en tenant compte éventuellement d'une valeur de correction (CORR), un intervalle ($TQ_{diff} = TQ_{max} - TQ_{min}$) de quotients partiels possibles (TQ) possédant une valeur telle que, compte tenu d'une grandeur d'erreur $\Delta$ telle que $0 \leq \Delta < 1$, la limitation du quotient partiel minimum ($TQ_{min}$) à un facteur multiplicatif m englobant n+l positions binaires est conditionnée conformément à la relation $m = TQ_{min} - \Delta$, le critère de convergence suivant est satisfait:

$$TQ_{diff} + \Delta < 2$$

que parmi les valeurs doubles pour m, qui sont obtenues sur la base du critère de convergence en quelques emplacements du tableau (T) contenant les quotients partiels (TQ) et varient au maximum de la valeur 1, la valeur respectivement la plus faible ($m_{min}$) est utilisée en tant que quotient partiel (TQ) et que les quotients partiels (TQ) pouvant être tirés du tableau (T) englobent respectivement n+1 positions binaires, et les quotients partiels (TQ) déterminés successivement sont combinés respectivement avec un chevauchement d'une position binaire pendant la division pour l'obtention d'un quotient partiel global actuel (GTQ) ou, dans le cas des derniers pas de division, pour l'obtention d'un quotient global (GQ).

2. Procédé suivant la revendication 1, caractérisé par le fait qu'avec la première impulsion de cadence (TK) de deux suites d'impulsions de cadence faiblement séparées l'une de l'autre, lors de chaque pas de division, la détermination du quotient partiel (TQ) commence, au moyen de l'avance du diviseur raccourci (DDK), moyennant l'utilisation d'un tableau (T) avant l'apparition du dividende non raccourci (DD) appliqué après la seconde impulsion de cadence (TK2) de la double suite d'impulsions de cadence.

3. Procédé suivant la revendication 1 ou 2, caractérisé par le fait qu'après le pas de division, qui est normalement le dernier, et en fonction de l'apparition d'une valeur double pour les derniers quotients partiels déterminants (TQ) dans le tableau (T), la division se poursuit jusqu'à ce qu'apparaisse un quotient partiel (TQ) qui, en raison du chevauchement, soit corrige le dernier quotient partiel déterminant (TQ), soit le sépare des positions des quotients partiels suivants (TQ) de telle sorte qu'une correction, provoquée par les quotients partiels suivants (TQ), de quotients partiels (TQ) précédents n'agit plus jusqu'au dernier quotient partiel déterminant (TQ).

4. Procédé suivant la revendication 1 ou 2, caractérisé par le fait qu'après le pas de division, qui est normalement le dernier, et en fonction de l'apparition d'une valeur double pour le dernier quotient partiel déterminant (TQ) dans le tableau (T), un seul autre pas de division est exécuté avec un quotient partiel (TQ), qui correspond au quotient partiel (TQ) le plus petit possible, qui produit une correction, et le dernier quotient partiel déterminant (TQ) et par conséquent le quotient global (GQ) sont éventuellement corrigés en fonction du signe du dividende (DD, DDK) non raccourcis ou raccourcis.

5. Procédé suivant l'une des revendications 1 à 4, caractérisé par le fait que pour les emplacements du tableau (T), non utilisés dans le cas d'une exécution de la division sans erreur, on utilise des entrées qui sont situées à l'extérieur de la gamme de valeurs, qui peut être représentée avec $n+1$ positions binaires pour les quotients partiels (TQ), et autorisent ainsi une identification d'erreurs.

6. Montage pour réaliser la division rapide de longs opérandes dans des installations de traitement de données, constitué par un dispositif pour normaliser les bits des opérandes et un dispositif pour la détermination prédictive d'un quotient partiel déterminant le pas respectivement suivant de division, sur la base d'un tableau contenant des quotients partiels et qui est commandé par des opérandes courts, caractérisé par le fait qu'il est prévu une partie de circuit de division (DST) servant à déterminer un dividende actuel non raccourci sous la forme de composantes de somme et de report (DD2,DD1), en fonction d'un quotient partiel respectif actuel (TQ) englobant $n+1$ positions binaires, et qui est constitué de cellules identiques (ZE), disposées côte-à-côte, pour chaque position binaire des opérandes, qu'il est prévu une partie de circuit (TQES) de détermination d'un quotient partiel, qui travaille en parallèle avec la partie de circuit de division (DST) et dans lequel, pendant la détermination du dividende non raccourci dans la représentation des composantes (DD2,DD1) dans la partie de circuit de division (DST), à partir du même quotient partiel actuel (TQ) est déterminé un dividende (DDK), qui est raccourci, compte tenu d'un critère de convergence, à i positions binaires de poids maximum et sert à la détermination du quotient partiel réel immédiatement suivant (TQ), et qu'il est prévu une partie de circuit (TQSS) de sommation des quotients partiels, dans laquelle les quotients partiels réels respectifs (TQ) sont réunis, en chevauchement sur une position binaire, pendant la division pour former un quotient partiel global actuel respectif (GTQ) ou, lors du dernier pas de division, pour former un quotient partiel global (GQ).

7. Montage suivant la revendication 6, caractérisé par le fait que la partie de circuit (TQES) de détermination des quotients partiels est commandée de façon cadencée par une première impulsion de cadence et que la partie de circuit de division (DST), qui est constituée par des cellules identiques (ZE), ainsi que la partie de circuit (TQSS) de sommation des quotients partiels sont commandées de façon cadencée par la seconde impulsion de cadence d'une double suite d'impulsions de cadence se répétant périodiquement.

8. Montage suivant la revendication 6 ou 7, caractérisé par le fait que la cellule (ZE) comporte, au niveau de sorties et d'entrées disposées symétriquement sur des côtés opposés, pour établir la liaison avec d'autres cellules (ZE), ainsi qu'une entrée de données ($DE_i$) pour réaliser l'enregistrement dans la cellule (ZE) ou plusieurs sorties de données ($DD1A_{i+1}$, $DD1A2_{i+1}$, $AD5CA_{i+1}$, $AD5SA_i$, $DD2A1_i$, $DD2A2_i$) pour réaliser la lecture à partir de la cellule.

9. Montage suivant la revendication 1, caractérisé par le fait que les entrées et sorties, situées réciproquement en vis-à-vis, de cellules (ZE) disposées côte-à-côte et comportant des entrées et des sorties disposées symétriquement, sont reliées entre elles directement.

10. Montage suivant la revendication 8 ou 9, caractérisé par le fait que l'entrée de données ($DE_i$) de la cellule (ZE) est ressortie sur un côté reliant les deux côtés disposés symétriquement en vis-à-vis et s'étendant dans la direction des valeurs binaires croissantes et décroissantes dans un dispositif à plusieurs cellules, et que les sorties de données ($DD1A2_{i+2}$; $AD5CA_{i+1}$ $AD5SA_i$, $DD2A2_i$) sont ressorties sur le côté opposé audit côté.

11. Montage suivant l'une des revendications 6 à 10, caractérisé par le fait que la cellule (ZE) comporte un registre de diviseurs ($DR_i$) ainsi qu'un registre de reports ($DD1_{i+1}$) et un registre de sommes ($DD2_i$) pour le dividende (DD) subdivisé en une composante de report et une composante de somme, pour une position binaire respective du diviseur (DR) ou du dividende (DD), de circuits de commutation de sélection 1-parmi-n ($MUX4_i$, $MUX5_i$) aux entrées desquels sont appliquées des valeurs binaires en partie négativées et non négativées, dérivées de positions binaires décalées du diviseur (DR) et du dividende (DD), dans le cas d'un dispositif à plusieurs cellules, pour la formation du multiple du diviseur selon une représentation avec complémentation, ou pour charger les registres de dividendes ($DD1_{i+1}$, $DD2_i$) et un premier additionneur ($AD4_i$) et un second additionneur ($AD5_i$) comportant respectivement trois entrées et respectivement une sortie pour le report et une sortie pour la somme pour l'exécution de la soustraction du multiple du diviseur par le dividende ou le reste du dividende, soustraction qui est convertie en une addition pour réaliser la complémentation à un du multiple du diviseur, fourni par les commutateurs de sélection (MUX4$_i$ MUX5$_i$).

**12.** Montage suivant la revendication 11, caractérisé par le fait que la première entrée du premier additionneur (AD4$_i$) de la cellule (ZE) est raccordée à la sortie (VDR1) du premier commutateur de sélection (MUX4$_i$), que la seconde entrée est raccordée à la sortie (VDR2) du second commutateur de sélection (MUX5$_i$) et que la troisième entrée est raccordée à l'entrée de cellule (DD2E$_{i-2}$), qui est disposée symétriquement en vis-à-vis de la sortie (DD2A$_{i-1}$) de la cellule, pour le transfert de la valeur binaire présente dans le registre de dividendes (DD2$_i$) d'une cellule voisine (ZE) dans le cas d'un dispositif à plusieurs cellules, que la sortie de report (AD4C$_i$) est raccordée à la sortie (AD4CA$_i$) d'une cellule, pour la retransmission d'une valeur de report déterminée dans la cellule (ZE), à une cellule (ZE) voisine dans le cas d'un dispositif à plusieurs cellules, et la sortie de la somme (AD4S$_i$) est raccordée à la première entrée du second additionneur (ADR$_i$), que la seconde entrée du second additionneur (AD5$_i$) est reliée à l'entrée (AD4CE$_{i-1}$) d'une cellule, située symétriquement en vis-à-vis de la sortie (AD4CA$_i$) de la cellule, pour le transfert du report déterminé dans le premier additionneur (AD4$_i$) dans la cellule (ZE) voisine dans le cas d'un dispositif à plusieurs cellules, que la troisième entrée est raccordée à l'entrée (DD1E$_{i-2}$) de la cellule, située symétriquement en vis-à-vis de la sortie (DD1A$_{i-1}$) de la cellule, pour le transfert de la valeur binaire présente dans le registre de dividendes (DD1$_{i+1}$) d'une cellule voisine (ZE) dans le cas d'un dispositif à plusieurs cellules, que la sortie (AD5C$_i$) du report est raccordée aussi bien au registre de dividendes (DD1$_{i+1}$) qu'à la sortie (AD5CA$_{i+1}$) de la cellule pour la retransmission du résultat du report, déterminé dans cette cellule (ZE), et que la sortie (AD5S$_i$) de la somme est raccordée aussi bien au registre de dividendes (DD2$_i$) qu'à la sortie (AD5SA$_i$) de la cellule pour la retransmission du résultat somme déterminé dans cette cellule (ZE) à des composants supplémentaires de traitement,

que les sorties des registres de dividendes (DD1$_{i+1}$ , DD2$_i$) sont raccordées respectivement à une sortie (DD1$_{i+1}$, DD2A1$_i$) de la cellule dans le sens de valeurs croissantes des bits dans le cas d'un dispositif à plusieurs cellules, comportant des entrées (DD1E$_i$, DD2E$_{i-1}$), disposées symétriquement en vis-à-vis, et respectivement à une sortie (DD1A2$_{i+1}$, DD2A2$_i$) de la cellule pour le transfert des valeurs binaires mémorisées dans les registres de dividendes à différents composants de traitement,

que le registre de diviseurs (DR$_i$) possède une sortie négativée et une sortie non négativée, qui sont raccordées aussi bien à des entrées du premier commutateur de sélection 1-parmi-n (MUX4$_i$) ainsi qu'à des sorties (DRNA$_i$, DRA$_i$) qui appartiennent à une première partie d'un groupe de sorties (DRNA$_i$ DRA$_i$, DRA$_{i+1}$, DRNA$_{i-2}$), qui sont ressorties dans le sens de valeurs binaires croissantes, dans le cas d'un dispositif à plusieurs cellules, groupe auquel, sur le côté situé à l'opposé de la cellule (ZE), est associé un groupe symétrique d'entrées (DRNA$_{i-1}$, DRE$_{i-1}$, DRNE$_{i-2}$, DRNE$_{i-2}$, DRNE$_{i-3}$), dont les entrées sont raccordées en partie par des lignes décalées en échelons, respectivement à une sortie (DRA$_{i-1}$, DRNA$_{i-2}$) appartenant à la seconde partie du groupe de sorties disposé symétriquement et en partie respectivement à des entrées des premier et second commutateurs de sélection 1-parmi-n (MUX4$_i$, MUX5$_i$), de sorte que, dans le cas d'un dispositif à plusieurs cellules, la valeur binaire présente dans le registre de division (DR$_i$) est appliquée, dans le sens des valeurs binaires croissantes, par l'intermédiaire des sorties et entrées, respectivement opposées en parallèle, de cellules voisines (ZE), sous forme négativée et sous forme non négativée aux entrées des premier et second commutateurs de sélection 1-parmi-n des cellules (ZE) voisines considérées, et

que la valeur binaire zéro est appliquée de façon fixe respectivement à une entrée des premier et second commutateurs de sélection 1-parmi-n (MUX4$_i$, MUX5$_i$).

**13.** Montage suivant la revendication 11 ou 12, caractérisé par le fait que les deux sorties (DD1A1$_{i+1}$, DD2A1$_i$) de la cellule (ZE), qui sont reliées aux sorties des registres de dividendes (DD1$_{i+1}$, DD2$_i$), appartiennent à une première partie d'un groupe de sorties (DD2A$_{i-1}$, DD1A$_i$, DD1A1$_{i+1}$ , DD2A1$_i$) ressorties dans le sens des valeurs binaires croissantes dans le cas d'un dispositif à plusieurs cellules, groupe auquel, sur le côté situé à l'opposé de la cellule (ZE) est associé un groupe symétrique d'entrées (DD2E$_{i-2}$ , DD1E$_{i-2}$ , DD1E$_{i-1}$, DD1E$_i$, DD2E$_{i+1}$), dont les entrées sont raccordées, en dehors de lignes décalées par des échelons, respectivement à une sortie (DD2A$_{i-1}$, DD1A$_{i-1}$, DD1A$_i$) appartenant à la seconde partie du groupe symétrique de sorties, de sorte que, dans le cas d'un dispositif à plusieurs cellules, la valeur binaire présente dans le registre de dividendes (DD2$_i$) et constituant la composante de formation de la somme est appliquée, dans le sens de valeurs binaires croissantes, par l'intermédiaire des sorties et entrées respectives de cellules voisines (ZE), à la troisième entrée du premier additionneur, et la valeur binaire située dans le registre de dividendes (DD1$_{i+1}$) formant des

composantes de report, est appliquée par l'intermédiaire des sorties et entrées respectives, situées en vis-à-vis et en parallèle, de cellules voisines (ZE) à la troisième entrée du second additionneur des cellules voisines (ZE) considérées.

14. Montage suivant la revendication 13, caractérisé par le fait que les groupes, associés symétriquement, d'entrées et de sorties de la cellule (ZE), par l'intermédiaire desquelles, dans le cas d'un dispositif à plusieurs cellules, les valeurs binaires présentes dans les registres de dividendes ($DD1_{i+1}$, $DD2_i$) sont transférées aux troisièmes entrées des premier et second additionneurs des cellules voisines (ZE) considérées, possèdent respectivement cinq sorties et entrées, et que les groupes, associés symétriquement, d'entrées et de sorties de la cellule (ZE), par l'intermédiaire desquelles, dans le cas d'un dispositif à cellules multiples, la valeur binaire présente dans le registre de diviseurs ($DR_i$) est transférée sous forme négativée et sous forme non négativée jusqu'à son application aux entrées des premier et second commutateurs de sélection 1-parmi-n des cellules voisines (ZE) considérées, comportent respectivement quatre sorties et entrées.

15. Montage suivant la revendication 11 ou 13, caractérisé par le fait que l'entrée de données ($DE_i$) de la cellule (ZE) est raccordée aussi bien à l'entrée du registre de divisions ($DR_i$) qu'à une sortie ($DA_i$) appartenant à une première partie d'un groupe de sorties ($DA_i$, $DA_{i+1}$, $DA_{i+2}$, $DA_{i+3}$, $DA_{i+4}$) ressorties dans le sens de valeurs binaires décroissantes, dans un dispositif à plusieurs cellules, qu'au côté situé à l'opposé de la cellule (ZE) est associé un groupe symétrique d'entrées ($DE_{i+1}$, $DE_{i+2}$, $DE_{i+3}$, $DE_{i+4}$, $DE_{i+5}$), dont les entrées sont raccordées, en dehors d'une sortie, par des lignes décalées suivant des échelons, respectivement à une sortie ($DA_{i+1}$, $DA_{i+2}$, $DA_{i+3}$, $DA_{i+4}$) appartenant à une seconde partie du groupe symétrique de sorties, de sorte que, dans le cas d'un dispositif à plusieurs cellules, la valeur binaire présente à l'entrée ($DE_i$) d'une cellule est appliquée, dans le sens de valeurs binaires décroissantes, par l'intermédiaire des sorties et entrées respectivement disposées en vis-à-vis et en parallèle, de cellules voisines (ZE), à l'une des entrées du second commutateur de sélection des cellules voisines (ZE) considérées.

16. Montage suivant la revendication 15, caractérisé par le fait que les groupes associés symétriquement de sorties et d'entrées de la cellule (ZE), par l'intermédiaire desquelles la valeur binaire appliquée à l'entrée de données ($DE_i$) de la cellule (ZE) est transférée jusqu'à l'entrée du commutateur de sélection 1-parmi-n d'une cellule voisine (ZE) suivante, comportent respectivement cinq sorties et entrées.

17. Montage suivant la revendication 11, 13 ou 15, caractérisé par le fait que les premier et second commutateurs de sélection 1-parmi-n ($MUX4_i$, $MUX5_i$) sont raccordés par des lignes de commande (QC1, QC2, QC3, QC4), qui, pour leur part, sont raccordées à un groupe symétrique d'entrées et de sorties, prévu des deux côtés, dans le cas d'un dispositif à cellules multiples, de valeurs binaires croissantes et décroissantes, sans détermination locale des entrées ou des sorties, et que le registre de diviseurs ($DR_i$) et le registre de dividendes ($DD_{i+1}$, $DD2_i$) sont raccordés respectivement à une ligne particulière de commande (WDR, WDD) pour l'enregistrement dans les registres ainsi qu'à une ligne commune de commande (RES) servant à effacer les registres, qui pour leur part sont raccordés respectivement à des entrées et des sorties, qui sont prévues, pour la formation d'un dispositif à cellules multiples, des deux côtés dans le sens de valeurs binaires croissantes et décroissantes et sont disposés symétriquement les unes par rapport aux autres, sans détermination locale des entrées ou des sorties.

18. Montage suivant la revendication 17, caractérisé par le fait que les premier et second commutateurs de sélection 1-parmi-n possèdent respectivement deux lignes de commande.

19. Montage suivant la revendication 11, 17 ou 18, caractérisé par le fait que les deux éléments de commutation de sélection 1-parmi-n ($MUX4_i$, $MUX5_i$) de la ligne (ZE) possèdent chacun quatre entrées pour la formation du multiple, compris entre zéro et sept, du diviseur (DR).

20. Montage suivant la revendication 6 ou 7, caractérisé par le fait que la partie de circuit (TQES) de détermination des quotients partiels comporte un registre de diviseurs ($DR^j$), qui est raccordé à la partie binaire de poids supérieur de l'entrée (DE) de l'ensemble du dispositif de division (DIV), un dispositif (DRBN) de normalisation des bits du diviseur, raccordé au registre de diviseurs ($DR^j$) et formant un multiple du diviseur raccourci ($DR^k$), un commutateur de sélection 1-parmi-n à plusieurs

26

positions (MUX1), qui réalise une sélection parmi les multiples préparés par le dispositif (DRBN) de normalisation des diviseurs, un commutateur de sélection 1-parmi-n (MUX2, MUX3) réalisant la sélection d'une composante parmi des multiples des composantes de formation de sommes (DD2$^j$) du dividende (DD) subdivisé en des composantes (DD1,DD2) du report et de la somme, un premier additionneur (AD1) raccordé aux deux commutateurs de sélection 1-parmi-n (MUX2, MUX3), et un second additionneur (AD2) raccordé au commutateur de sélection 1-parmi-n (MUX1) et à l'additionneur (AD1), un registre raccourci de dividendes (DDK) et un générateur de quotients partiels (TGQ) raccordé au dispositif (DRBN) de normalisation des bits du diviseur, à la partie de circuit de division (DST), au registre raccourci de dividendes (DDK) et à la partie de circuit (TQSS) de sommation des quotients partiels,

que le commutateur de sélection 1-parmi-n (MUX1) est commandé par le quotient partiel (TQ) et que les deux commutateurs de sélection 1-parmi-n (MUX2, MUX3) sont commandés par l'amplitude de décalage apparaissant lors de la normalisation des bits du diviseur raccourci (DR$^j$), et

que le dispositif (DRBN) de normalisation des bits du diviseur fournit la partie inférieure et le registre raccourci de dividendes (DDK), la partie supérieure d'un groupe de signaux de commande pour le générateur de quotients partiels (TGQ).

21. Montage suivant la revendication 20, caractérisé par le fait que le commutateur de sélection 1-parmi-n (MUX1) comporte huit entrées pour la sélection des multiples, qui vont de zéro à sept, du diviseur raccourci (DR$^k$), normalisé au niveau des bits.

22. Montage suivant la revendication 20, caractérisé par le fait que le dividende raccourci (DDK) et le diviseur raccourci (DRK) possèdent chacun cinq positions binaires.

23. Montage suivant la revendication 20, caractérisé par le fait que le générateur de quotients partiels (TGQ) est un tableau ROM.

24. Montage suivant la revendication 20 ou 23, caractérisé par le fait que le quotient partiel (TQ) produit par le générateur de quotients partiels (TGQ) comporte respectivement trois positions binaires.

25. Montage suivant la revendication 6 ou 7, caractérisé par le fait que la partie de circuit (TQSS) de sommation des quotients partiels comporte un registre de quotients (QUO) et un additionneur (AD3) raccordé au registre de quotients (QUO) et au générateur de quotients partiels (TGQ), et que la sortie de l'additionneur (AD3) est raccordée d'une manière décalée à un nombre prédéterminé de positions binaires de poids les plus faibles du registre de quotients (QUO).

26. Montage suivant la revendication 25, caractérisé par le fait que la sortie de l'additionneur (AD3) est raccordée, en étant décalée de deux positions binaires, à l'entrée du registre de quotients (QUO).

27. Montage suivant la revendication 6 ou 7, caractérisé par le fait que la partie de circuit (TQSS) de sommation des quotients partiels est un registre à décalage qui réalise une incrémentation en fonction de la position binaire de poids minimum du quotient partiel (TQ) délivré par le générateur de quotients partiels (TGQ) et réalise ensuite un décalage sur un nombre de n positions binaires, en fonction du nombre des positions binaires qui poursuivent le développement du quotient partiel général (GTQ) pour chaque pas de la division.

# FIG 1

DIVIDEND (DD) : $3\,9\,6\,8\,8_{10}$ = $1\,0\,0\,1\,1\,0\,1\,1\,0\,0\,0\,0\,1\,0\,0\,0_2$

DIVISOR (DR) : $1\,6\,4_{10}$ = $1\,0\,1\,0\,0\,1\,0\,0_2$

VERKÜRZTER DIVISOR (DRK) : $2\,0_{10}$ = $1\,0\,1\,0\,0_2$ = $14_{16}$

ERGEBNIS : $24\,1.\overline{99}_{10}= 2\,4\,2_{10}$ = $1\,1\,1\,1\,0\,0\,0\,1.\overline{11}_2 = 1111\,0010_2$

KORREKTURFAKTOR (CORR): $5_{10}$ = $1\,0\,1_2$

| $TQ_{10}$ ($m_{min}$) | $TQ\text{-}T_{10}$ $m_{min}/m_{max}$ | $L\text{-}Adr_{10}$ $DDK_{16}/DRK_{16}$ | $DDK_{16}$ | $DDK^K_2+$ $CORR_2$ | | |
|---|---|---|---|---|---|---|
| 3 | 3/4 | 0A | 0A | (01010) 010 | 0:1 0 0 1 1 0 1,1 0 0 0 1 0 0 0.0 0:1 0 1 0 0 1 0 0 = 0 1 1 | | = 0 1 1 |
| | | | | | 0 1 1 1 1 0 1 1 0 0 | + | 0 1 0 |
| | | | | | 1 1 | | |
| 2 | 2/3 | 08/14 | 08 | (01000) 101 | 0,0:1 0 0 0 0 0 0,0 0 0 ... | | 0 1 1 1 0 |
| | | | | | 0 1 0 1 0 0 1 0 0 0 | + | 1 0 0 |
| | | | | | 1 1 1 1 1 1 | | |
| 4 | 4/5 | 0C/14 | 0C | (01100) 001 | 0,0:1.0 1 1 1 0 0,0 1 0 ... | | 0 1 1 1 1 0 0 |
| | | | | | 1 0 1 0 0 1 0 0 0 0 | + | 0 0 1 |
| | | | | | 1 | | |
| 1 | 1/2 | 05/14 | 05 | (00101) 110 | 0,0:0 1 0 1 0 0 1,0 0 0 ... | | 0 1 1 1 1 0 0 0 1 |
| | | | | | 0 0 1 0 1 0 0 1 0 0 | + | 0.1 1 |
| | | | | | 1 1 1 | | |
| 3 | 3/4 | 0A/14 | 0A | (01010) 111 | 0,0:1 0 1 0 0 1 0,0.0 0 ... | | 0 1 1 1 1 0 0 0 1.1 1 |
| | | | | | 0 1 1 1 1 0 1 1.0 0 | + | 0 1 1 |
| | | | | | 1 1 1 1 1 1 | | |
| 3 | 3/4 | 0A/14 | 0A | (01010) 111 | 0,0:1 0 1 0 0 1.0,0 0 0 ... | | 0 1 1 1 1 0 0 0 1.1 1 1 1... |

FIG 2

# FIG 3

| DRK | 1 | 1 | 1 | 1 | 1 | 1 | 1 | 1 | 1 | 1 | 1 | 1 | 1 | 1 | 1 | 1 |
|-----|---|---|---|---|---|---|---|---|---|---|---|---|---|---|---|---|
| DDK | 0 | 1 | 2 | 3 | 4 | 5 | 6 | 7 | 8 | 9 | A | B | C | D | E | F |
| 00 | 0 | 0 | 0 | 0 | 0 | 0 | 0 | 0 | 0 | 0 | 0 | 0 | 0 | 0 | 0 | 0 |
| 01 | 0 | 0 | 0 | 0 | 0 | 0 | 0 | 0 | 0 | 0 | 0 | 0 | 0 | 0 | 0 | 0 |
| 02 | 01 | 01 | 01 | 01 | 01 | 0 | 0 | 0 | 0 | 0 | 0 | 0 | 0 | 0 | 0 | 0 |
| 03 | 01 | 01 | 01 | 01 | 01 | 01 | 01 | 01 | 01 | 01 | 01 | 01 | 01 | 0 | 0 | 0 |
| 04 | 12 | 12 | 12 | 1 | 1 | 1 | 1 | 1 | 01 | 01 | 01 | 01 | 01 | 01 | 01 | 01 |
| 05 | 12 | 12 | 12 | 12 | 12 | 12 | 12 | 1 | 1 | 1 | 1 | 1 | 1 | 1 | 1 | 1 |
| 06 | 23 | 23 | 2 | 2 | 12 | 12 | 12 | 12 | 12 | 12 | 12 | 1 | 1 | 1 | 1 | 1 |
| 07 | 23 | 23 | 23 | 23 | 23 | 2 | 2 | 2 | 12 | 12 | 12 | 12 | 12 | 12 | 12 | 1 |
| 08 | 34 | 34 | 23 | 23 | 23 | 23 | 23 | 2 | 2 | 2 | 2 | 2 | 12 | 12 | 12 | 12 |
| 09 | 34 | 34 | 34 | 34 | 3 | 23 | 23 | 23 | 23 | 23 | 2 | 2 | 2 | 2 | 2 | 2 |
| 0A | 45 | 4 | 34 | 34 | 34 | 34 | 3 | 3 | 23 | 23 | 23 | 23 | 23 | 2 | 2 | 2 |
| 0B | 45 | 45 | 45 | 4 | 34 | 34 | 34 | 34 | 3 | 3 | 23 | 23 | 23 | 23 | 23 | 2 |
| 0C | 56 | 45 | 45 | 45 | 45 | 4 | 34 | 34 | 34 | 34 | 3 | 3 | 3 | 23 | 23 | 23 |
| 0D | 56 | 56 | 56 | 45 | 45 | 45 | 4 | 4 | 34 | 34 | 34 | 34 | 3 | 3 | 3 | 3 |
| 0E | 67 | 56 | 56 | 56 | 45 | 45 | 45 | 45 | 4 | 4 | 34 | 34 | 34 | 34 | 3 | 3 |
| 0F | 67 | 67 | 56 | 56 | 56 | 5 | 45 | 45 | 45 | 4 | 4 | 4 | 34 | 34 | 34 | 34 |
| 10 | 7 | 67 | 67 | 6 | 56 | 56 | 56 | 5 | 45 | 45 | 45 | 4 | 4 | 4 | 34 | 34 |
| 11 | 7 | 7 | 67 | 67 | 67 | 56 | 56 | 56 | 5 | 45 | 45 | 45 | 45 | 4 | 4 | 4 |
| 12 | - | 7 | 7 | 67 | 67 | 67 | 56 | 56 | 56 | 5 | 5 | 45 | 45 | 45 | 4 | 4 |
| 13 | - | - | 7 | 7 | 67 | 67 | 67 | 6 | 56 | 56 | 56 | 5 | 45 | 45 | 45 | 45 |
| 14 | - | - | - | 7 | 7 | 67 | 67 | 67 | 6 | 56 | 56 | 56 | 5 | 5 | 45 | 45 |
| 15 | - | - | - | - | 7 | 7 | 67 | 67 | 67 | 6 | 56 | 56 | 56 | 5 | 5 | 5 |
| 16 | - | - | - | - | - | 7 | 7 | 7 | 67 | 67 | 6 | 6 | 56 | 56 | 56 | 5 |
| 17 | - | - | - | - | - | - | 7 | 7 | 7 | 67 | 67 | 6 | 6 | 56 | 56 | 56 |
| 18 | - | - | - | - | - | - | - | 7 | 7 | 7 | 67 | 67 | 67 | 6 | 56 | 56 |
| 19 | - | - | - | - | - | - | - | - | 7 | 7 | 7 | 67 | 67 | 67 | 6 | 6 |
| 1A | - | - | - | - | - | - | - | - | - | 7 | 7 | 7 | 67 | 67 | 67 | 6 |
| 1B | - | - | - | - | - | - | - | - | - | - | 7 | 7 | 7 | 67 | 67 | 67 |
| 1C | - | - | - | - | - | - | - | - | - | - | - | 7 | 7 | 7 | 67 | 67 |
| 1D | - | - | - | - | - | - | - | - | - | - | - | - | 7 | 7 | 7 | 7 |
| 1E | - | - | - | - | - | - | - | - | - | - | - | - | - | 7 | 7 | 7 |
| 1F | - | - | - | - | - | - | - | - | - | - | - | - | - | - | 7 | 7 |

# FIG 4

EP 0 256 455 B1

## FIG 5

$DE_i$   Divisionszelle ZE

$DE_{i+1}$ → → $DA_i$
$DE_{i+2}$ → → $DA_{i+1}$
$DE_{i+3}$ → → $DA_{i+2}$
$DE_{i+4}$ → → $DA_{i+3}$
$DE_{i+5}$ → → $DA_{i+4}$

$DR_i$

WDR — — — WDR
RES — — — RES

$DRNA_i$ ← ← $DRNE_{i-1}$
$DRA_i$ ← ← $DRE_{i-1}$
$DRA_{i-1}$ ← ← $DRNE_{i-2}$
$DRNA_{i-2}$ ← ← $DRNE_{i-3}$

$\boxed{0}$ (1*DR) +(2*DR) +(1*DR)   $MUX4_i$   VDR1
$\boxed{0}$ (4*DR) +(8*DR) +DE_{i+5}   $MUX5_i$   VDR2

QC1 — — — QC1
QC2 — — — QC2
QC3 — — — QC3
QC4 — — — QC4

$AD4_i$   C   S

$AD4CA_i$ ←   $AD4C_i$   $AD4S_i$   → $AD4CE_{i-1}$

$AD5_i$   C   S

$AD5C_i$   $AD5S_i$

$DD1_{i+1}$   $DD2_i$

WDD — — — WDD

$DD2A_{i-1}$ ← ← $DD2E_{i-2}$
$DD1A_{i-1}$ ← ← $DD1E_{i-2}$
$DD1A_i$ ← ← $DD1E_{i-1}$
$DD1A1_{i+1}$ ← ← $DD1E_i$
$DD2A1_i$ ← ← $DD2E_{i-1}$

$DD1A2_{i+1}$   $AD5CA_{i+1}$   $AD5SA_i$   $DD2A2_i$

# FIG 6